# EUROPEAN PATENT APPLICATION

(11) **EP 4 568 297 A1**
(43) Date of publication of application: **11.06.2025**
(21) Application number: 23849254.0
(22) Date of filing: 27.07.2023
(51) Int. Cl.: H04W 4/02

(54) **POSITIONING METHOD AND APPARATUS AND DEVICE**

(30) Priority: 02.08.2022 CN 202210924291
(71) Applicant: Vivo Mobile Communication Co., Ltd., Dongguan, Guangdong 523863 (CN)
(72) Inventor: ZHANG, Hongping, Dongguan, Guangdong 523863 (CN); LI, Yuan, Dongguan, Guangdong 523863 (CN); PAN, Xiang, Dongguan, Guangdong 523863 (CN)
(74) Representative: Winter, Brandl - Partnerschaft mbB
(86) International application number: PCT/CN2023/109477
(87) International publication number: WO 2024/027546

(57) **Abstract**

This application discloses a positioning method, a positioning apparatus, and a device, pertaining to the field of communications technologies. The positioning method of embodiments of this application includes: receiving, by a location server, a location request, where the location request is used to request to perform positioning for a target terminal; determining, by the location server, to perform sidelink positioning for the target terminal; determining, by the location server, one or more anchor terminals participating in positioning; performing, by the location server, interaction with the target terminal and one or more anchor terminals separately, performing a sidelink positioning procedure, and obtaining positioning measurement information; and obtaining, by the location server, location information of the target terminal based on the positioning measurement information.

## Description

### CROSS-REFERENCE TO RELATED APPLICATIONS

This application claims priority to Chinese Patent Application No. 202210924291.8, filed with the China National Intellectual Property Administration on August 2, 2022 and entitled "POSITIONING METHOD, POSITIONING APPARATUS, AND DEVICE", which is incorporated herein by reference in its entirety.

### TECHNICAL FIELD

This application pertains to the field of communications technologies, and specifically, relates to a positioning method, a positioning apparatus, and a device.

### BACKGROUND

For the mobile network-based positioning technology, a location management function (LMF) network element is used as a location server to perform measurement at a Uu interface (that is, a radio interface between user equipment (UE) and a base station) or a reference signal of a satellite navigation signal, so as to implement positioning. The positioning technology supports the following types of positioning:
the base station sends a downlink positioning reference signal (PRS), and the UE performs measurement;
the UE sends an uplink positioning reference signal (such as a sounding reference signal (SRS)), and the base station performs measurement; and
the UE performs measurement on a satellite navigation signal.

It can be learned from the foregoing that the current positioning technology is based on a reference signal of the Uu interface.

The sidelink (also referred to as side link, side-link, or sidelink) (SL) transmission technology has gradually matured, for example, may be used to support basic safety communication of vehicle to everything (V2X) or more comprehensive services such as unicast, multicast or groupcast. Therefore, in SL scenarios, there is also a need for positioning based on PC5 interface (that is, a radio interface between UEs), such as positioning on a relative location between two vehicles. However, there is no SL positioning method based on PC5 interface at present.

### SUMMARY

Embodiments of this application provide a positioning method, a positioning apparatus, and a device, so as to implement SL positioning based on PC5 interface.

According to a first aspect, a positioning method is provided, including:
receiving, by a location server, a location request, where the location request is used to request to perform positioning for a target terminal;
determining, by the location server, to perform sidelink positioning for the target terminal;
determining, by the location server, one or more anchor terminals participating in positioning;
performing, by the location server, interaction with the target terminal and one or more anchor terminals separately, performing a sidelink positioning procedure, and obtaining positioning measurement information; and
obtaining, by the location server, location information of the target terminal based on the positioning measurement information.

According to a second aspect, a positioning method is provided, including:
receiving, by a target terminal, a first request message sent by a location server, where the first request message is used for requesting a candidate anchor terminal;
performing, by the target terminal, a candidate anchor terminal discovery procedure to obtain a candidate anchor terminal list; and
sending, by the target terminal, a first response message for the first request message to the location server, where the first response message includes the candidate anchor terminal list.

According to a third aspect, a positioning method is provided, including:
performing, by an anchor terminal, interaction with a location server and performing a sidelink positioning procedure for positioning on a target terminal.

According to a fourth aspect, a positioning method is provided, including:
receiving, by an access and mobility management function AMF, a third message sent by a location server, where the third message includes identification information of an anchor terminal and a fifth LPP message sent by the location server to the anchor terminal, and the AMF is an AMF registered by the anchor terminal;
obtaining, by the AMF, context information of the anchor terminal based on the identification information of the anchor terminal; and
sending, by the AMF, a first non-access stratum NAS message to the anchor terminal based on the context information, where the first NAS message includes the fifth LPP message.

According to a fifth aspect, a positioning apparatus is provided, including:
a first receiving module, configured to receive a location request, where the location request is used to request to perform positioning for a target terminal;
a first determining module, configured to determine to perform sidelink positioning for the target terminal;
an anchor terminal determining module, configured to determine one or more anchor terminals participating in positioning;
a first interaction module, configured to perform interaction with the target terminal and one or more anchor terminals separately, perform a sidelink positioning procedure, and obtain positioning measurement information; and
a location obtaining module, configured to obtain location information of the target terminal based on the positioning measurement information.

According to a sixth aspect, a positioning apparatus is provided, including:
a second receiving module, configured to receive a first request message sent by a location server, where the first request message is used for requesting a candidate anchor terminal;
a terminal discovery module, configured to perform a candidate anchor terminal discovery procedure to obtain a candidate anchor terminal list; and
a first sending module, configured to send a first response message for the first request message to the location server, where the first response message includes the candidate anchor terminal list.

According to a seventh aspect, a positioning apparatus is provided, including:
a second interaction module, configured to perform interaction with a location server and perform a sidelink positioning procedure for positioning on a target terminal.

According to an eighth aspect, a positioning apparatus is provided, including:
a third receiving module, configured to receive a third message sent by a location server, where the third message includes identification information of an anchor terminal and a fifth LPP message sent by the location server to the anchor terminal, and the AMF is an AMF registered by the anchor terminal;
a context information obtaining module, configured to obtain context information of the anchor terminal based on the identification information of the anchor terminal; and
a third sending module, configured to send a first non-access stratum NAS message to the anchor terminal based on the context information, where the first NAS message includes the fifth LPP message.

According to a ninth aspect, a network-side device is provided, including a processor and a memory, where a program or instructions capable of running on the processor are stored in the memory, and when the program or instructions are executed by the processor, the steps of the method according to the first aspect or the fourth aspect are implemented.

According to a tenth aspect, a terminal is provided, including a processor and a memory, where a program or instructions capable of running on the processor are stored in the memory, and when the program or instructions are executed by the processor, the steps of the method according to the second aspect or the third aspect are implemented.

According to an eleventh aspect, a positioning system is provided, including a network-side device and a terminal, where the network-side device can be configured to execute the steps of the positioning method according to the first aspect or the fourth aspect, and the terminal can be configured to execute the steps of the positioning method according to the second aspect or the third aspect.

According to a twelfth aspect, a readable storage medium is provided, where a program or instructions are stored in the readable storage medium. When the program or the instructions are executed by a processor, the steps of the method according to the first aspect, the second aspect, the third aspect, or the fourth aspect are implemented.

According to a thirteenth aspect, a chip is provided, where the chip includes a processor and a communication interface, the communication interface is coupled to the processor, and the processor is configured to run a program or instructions to implement the method according to the first aspect, the second aspect, the third aspect, or the fourth aspect.

According to a fourteenth aspect, a computer program/program product is provided, where the computer program/program product is stored in a storage medium, and the computer program/program product is executed by at least one processor to implement the steps of the method according to the first aspect, the second aspect, the third aspect, or the fourth aspect.

According to a fifteenth aspect, an embodiment of this application provides a positioning apparatus, where the apparatus is configured to execute the steps of the method according to the first aspect, the second aspect, the third aspect, or the fourth aspect.

In the embodiments of this application, the location server can receive a location request for requesting to perform positioning for the target terminal, and determine to perform sidelink positioning for the target terminal, so as to determine one or more anchor terminals participating in positioning, so that the location server can separately perform interaction with the target terminal and the anchor terminal participating in positioning, perform the sidelink positioning procedure, and obtain the positioning measurement information. In this way, the location server can determine the location information of the target terminal of positioning based on the positioning measurement information. Therefore, in the embodiments of this application, the positioning procedure for the target terminal based on sidelink can be implemented through information interaction between the location server, the target terminal, and the anchor terminal, that is, sidelink positioning based on PC5 interface is implemented in the embodiments of this application.

### BRIEF DESCRIPTION OF DRAWINGS

FIG. 1 is a block diagram of a wireless communication system to which embodiments of this application are applicable;
FIG. 2 is a schematic diagram of an architecture of positioning based on Uu interface in the related art;
FIG. 3 is an overall schematic flowchart of Uu interface-based positioning in the related art;
FIG. 4 is a schematic diagram of a protocol stack of long term evolution positioning protocol (LPP);
FIG. 5 is a schematic diagram of a protocol stack of new radio positioning protocol a (NRPPa);
FIG. 6 is a schematic flowchart of an uplink positioning method based on Uu interface in the related art;
FIG. 7 is a schematic diagram of uplink transmission, downlink transmission, and sidelink transmission according to an embodiment of this application;
FIG. 8 is a flowchart of a positioning method according to an embodiment of this application;
FIG. 9 is a flowchart of another positioning method according to an embodiment of this application;
FIG. 10 is a flowchart of another positioning method according to an embodiment of this application;
FIG. 11 is a flowchart of another positioning method according to an embodiment of this application;
FIG. 12 is a schematic diagram of an architecture to which a positioning method is applicable according to an embodiment of this application;
FIG. 13 is a schematic flowchart of a specific embodiment of a positioning method according to an embodiment of this application;
FIG. 14 is a schematic diagram of interaction content between an LMF and an anchor UE according to an embodiment of this application;
FIG. 15 is a schematic flowchart of interaction between an LMF and an anchor UE through a target UE according to an embodiment of this application;
FIG. 16 is a schematic flowchart of interaction between an LMF and an anchor UE through an AMF according to an embodiment of this application;
FIG. 17 is a structural block diagram of a positioning apparatus according to an embodiment of this application;
FIG. 18 is a structural block diagram of another positioning apparatus according to an embodiment of this application;
FIG. 19 is a structural block diagram of another positioning apparatus according to an embodiment of this application;
FIG. 20 is a structural block diagram of another positioning apparatus according to an embodiment of this application;
FIG. 21 is a structural block diagram of a communication device according to an embodiment of this application;
FIG. 22 is a structural block diagram of a terminal device according to an embodiment of this application;
FIG. 23 is a structural block diagram of a network-side device according to an embodiment of this application; and
FIG. 24 is a structural block diagram of another network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (LTE) or LTE-Advanced (LTE-A) system, and may also be applied to other wireless communication systems, for example, code division multiple access (CDMA), time division multiple access (TDMA), frequency division multiple access (FDMA), orthogonal frequency division multiple access (OFDMA), single-carrier frequency-division multiple access (SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (NR) system is described for an illustration purpose, and NR terms are used in most of the following descriptions, although these technologies may also be applied to other applications than an NR system application, for example, the 6th generation (6G) communication system.

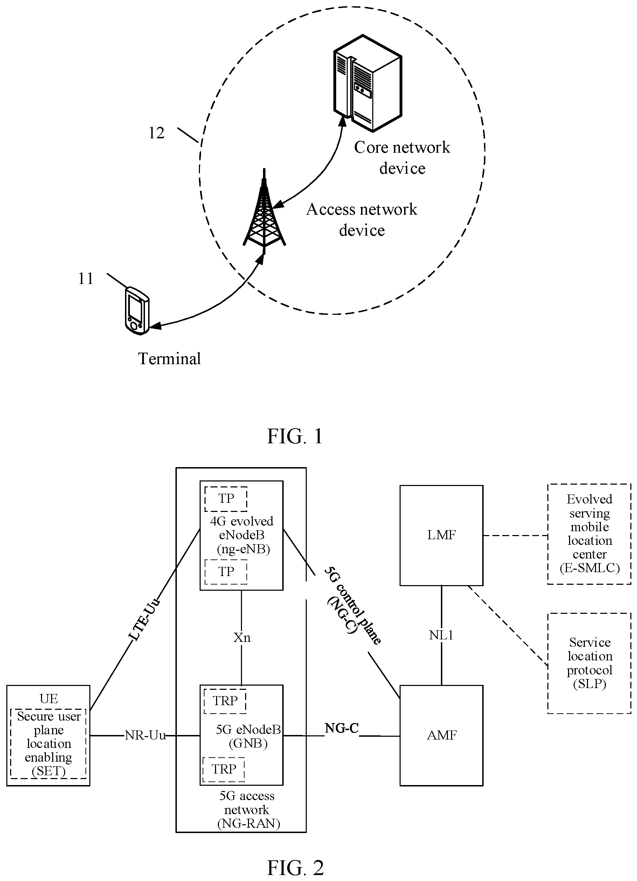

FIG. 1 is a block diagram of a wireless communication system to which the embodiments of this application are applicable. The wireless communication system includes a terminal 11 and a network-side device 12. The terminal 11 may be a mobile phone, a tablet personal computer, a laptop computer, a personal digital assistant (PDA), a palmtop computer, a netbook, an ultra-mobile personal computer (UMPC), a mobile Internet device (MID), an augmented reality (AR)/virtual reality (VR) device, a robot, a wearable device, vehicle user equipment (VUE), pedestrian user equipment (PUE), a smart home device (a home device with wireless communication function, such as a refrigerator, a television, a washing machine, or a furniture), a game console, a personal computer (PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (BTS), a radio base station, a radio transceiver, a basic service set (BSS), an extended service set (ESS), a home NodeB, a home evolved NodeB, a transmitting receiving point (TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), a unified data management (UDM), a unified data repository (UDR), a home subscriber server (HSS), a centralized network configuration (CNC), a network repository function (NRF), a network exposure function (NEF), a local NEF (L-NEF), a binding support function (BSF), an application function (AF), and the like. It should be noted that, in the embodiments of this application, a core network device in an NR system is used as an example for description, and a specific type of the core network device is not limited.

To understand the positioning method of the embodiments of this application, the following related technologies are described:
In a first aspect, positioning based on Uu interface is described.

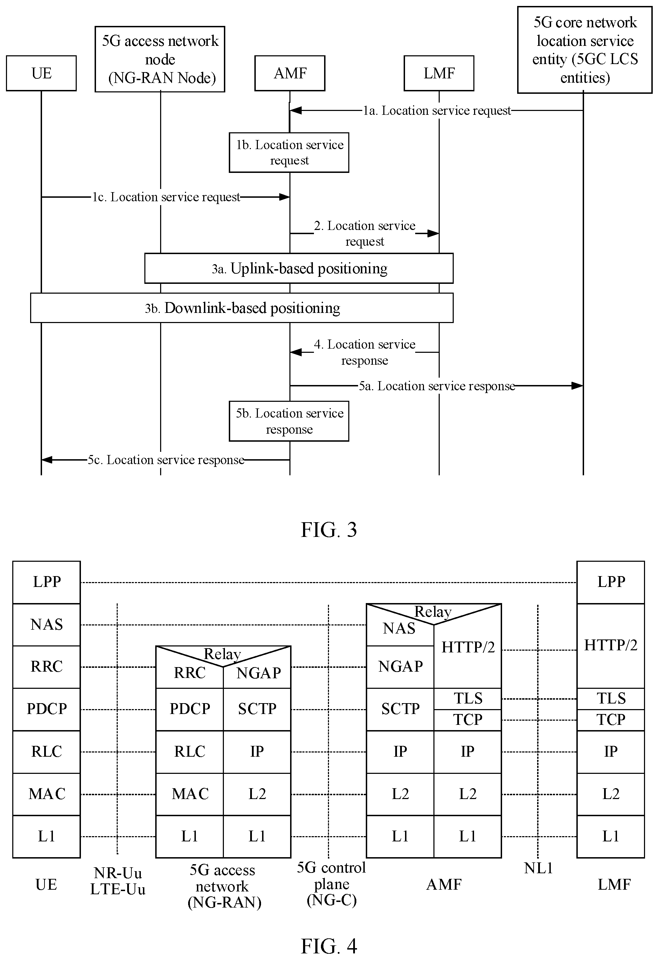

Based on a positioning architecture shown in FIG. 2, the overall positioning procedure can be shown in FIG. 3, that is, an AMF receives a location service request for a terminal from a third party, a terminal, or the AMF itself. If the terminal is in a connection management-idle (CM-IDLE) state at that time, the AMF pages the terminal to trigger the terminal to enter a connection management-connected state (CM-CONNECTED) (that is, a corresponding state of the terminal at an air interface is a radio resource control (RRC) connected state). Then, the AMF sends a location service request to an LMF, and the LMF determines a positioning method based on Uu interface. The positioning method is divided into uplink-based positioning and downlink-based positioning. Then, the LMF initiates a specific positioning procedure to obtain a location of the terminal.

In the positioning procedure, the LMF may need to perform interaction with the terminal through LPP protocol and/or perform interaction with the base station through NRPPa protocol, for example, exchanging a capability, exchanging positioning assistance data, or exchanging a positioning measurement result, so that the LMF may send a location service response to the AMF, carrying the location of the terminal.

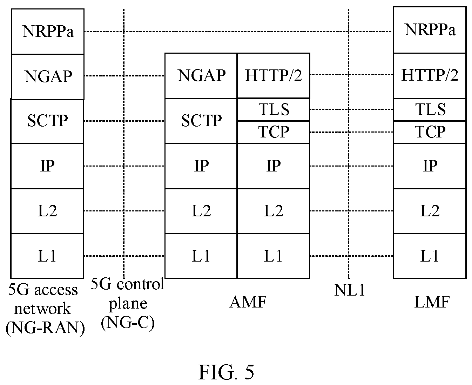

The protocol stack of LPP is shown in FIG. 4, and the protocol stack of NR positioning protocol A (NRPPa) is shown in FIG. 5. Specifically, in FIGs. 4 and 5, LPP is a long-term evolution positioning protocol, NAS is non-access stratum, RRC is radio resource control, PDCP is a packet data convergence protocol, RLC is a radio link control protocol, MAC is a media access control protocol, L1 is layer 1, L2 is layer 2, IP is an Internet protocol, SCTP is a stream control transmission protocol, NGAP is a next-generation application protocol, N2 interface is an application protocol, TLS is a transport layer security protocol, TCP is a transmission control protocol, HTTP is a hypertext transfer protocol, and NRPPa is an NR positioning protocol.

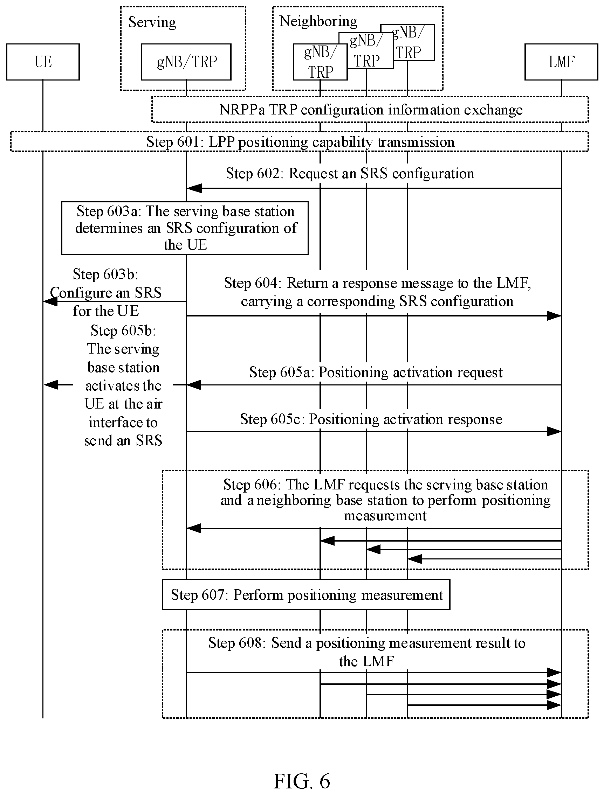

Specifically, a procedure of a typical uplink positioning method (using uplink time difference of arrival (UL-TDOA) positioning as an example) is shown in FIG. 6, and details are as follows from steps 601 to 608:
Step 601: The LMF obtains an LPP positioning capability of UE.
Step 602: The LMF requests an SRS configuration from a serving base station.
Step 603a: The serving base station determines an SRS configuration of the UE.
Step 603b: The serving base station configures an SRS for the UE through an RRC message.
Step 604: The serving base station returns a response message to the LMF, carrying a corresponding SRS configuration.
Step 605a: The LMF sends a positioning activation request message to the serving base station, requesting to activate SRS transmission.
Step 605b: The serving base station activates the UE at the air interface to send an SRS.
Step 605c: The serving base station returns a positioning activation response message.
Step 606: The LMF requests the serving base station and a neighboring base station to perform positioning measurement.
Step 607: The serving base station and the neighboring base station perform positioning measurement to obtain a positioning measurement result.
Step 608: The serving base station and the neighboring base station send the positioning measurement result to the LMF.

In the foregoing process, configuration information of an SRS resource is determined by the serving base station and sent to the UE, and then the UE is activated to send the SRS after receiving the request; and the LMF sends the SRS configuration to the serving base station and neighboring base station that need to perform measurement on an SRS signal.

In a second aspect, SL is described.

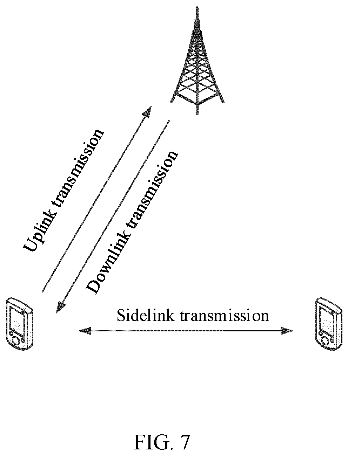

SL transmission means that data transmission is performed between UEs directly at the physical layer (as shown in FIG. 7). Long term evolution (LTE) SL communication is based on broadcast. Although LTE sidelink can be used to support basic safety communication of vehicle to everything (V2X), LTE sidelink is not applicable to other more advanced V2X services. A 5G NR system supports more-advanced SL transmission design, such as unicast and multicast or groupcast, and therefore can support more comprehensive service types.

In a third aspect, an NR SL resource allocation mode is described.

NR V2X defines two resource allocation modes (mode): in mode 1, resources are scheduled by a base station; in mode 2, UE determines itself what resources to be used for transmission. In this case, the resource information may come from a broadcast message of the base station or pre-configured information. If the UE operates within coverage of the base station and has an RRC connection to the base station, the resource allocation mode may be mode 1 and/or mode 2; if the UE operates within coverage of the base station but has no RRC connection to the base station, the resource allocation mode can be only mode 2; and if the UE is outside coverage of the base station, the resource allocation mode can be only mode 2, for example, V2X transmission is performed based on pre-configured information.

Mode 1 supports three types of scheduling: dynamic scheduling, configured grant type 1, and configured grant type 2. Dynamic scheduling means that the base station dynamically schedules a resource. Configured grant type 1 and configured grant type 2 are configured by the base station. The former can be used directly, while the latter is authorized to the UE by the base station once through an activation process. In a case that the UE does not receive deactivation, a resource designated in the first authorization will be used all the time and transmitted periodically based on a configured period.

In mode 2, a specific operating manner is as follows:
(1) After resource selection is triggered, TX UE first determines a resource selection window, with a lower boundary of the resource selection window being at a time of T1 after triggering of resource selection and an upper boundary for resource selection window being a time of T2 after triggering, where T2 is a value selected from a packet delay budget (PDB) of transport block (TB) transmission, and T2 is not earlier than T1.
(2) Before resource selection, the UE needs to determine a candidate resource set for resource selection by comparing a reference signal received power (RSRP) measured on resources in a resource selection window with a corresponding RSRP threshold and then adding the resources into the candidate resource set if the RSRP is lower than the RSRP threshold.
(3) After the resource set is determined, the UE randomly selects a transmission resource from the candidate resource set. The UE may reserve transmission resources for a next transmission during a current transmission.

NR V2X supports a chained resource reservation mode, that is, one piece of control information (sidelink control information, SCI) may be used for reserving a current resource and also for reserving a maximum of two additional resources, and two more reserved resources can be indicated on a next resource. That is, within the resource selection window, resources can be continuously reserved in a dynamic reservation manner.

The following specifically describes the positioning method provided in the embodiments of this application through specific embodiments and application scenarios thereof with reference to the accompanying drawings.

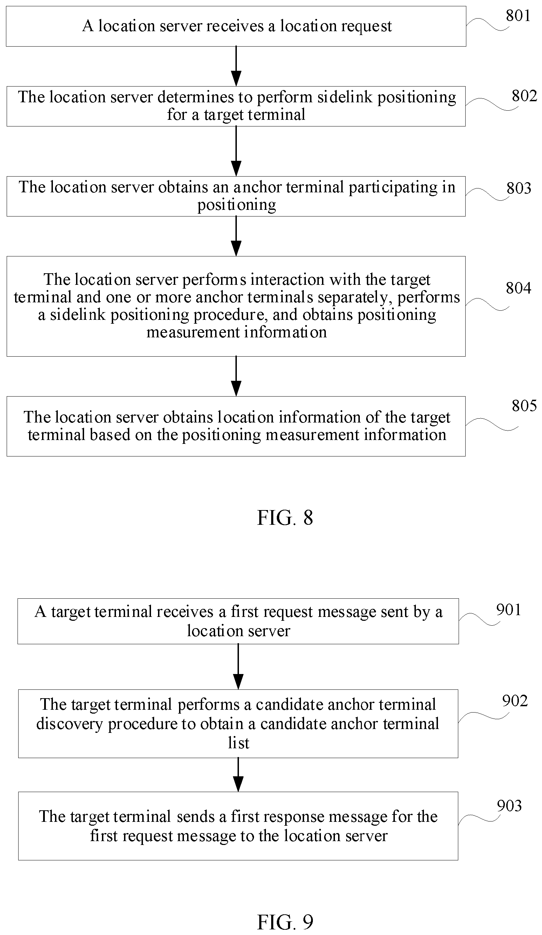

In a first aspect, an embodiment of this application provides a positioning method. As shown in FIG. 8, the method may include the following steps 801 to 804.

Step 801: A location server receives a location request.

The location request is used to request to perform positioning for a target terminal.

In addition, the location server is a network-side device, for example, may be an LMF. The LMF is a network node providing a location service function. The target terminal (that is, target UE) is target UE for positioning. For positioning, an absolute location, a relative location, or a range of the UE needs to be obtained.

In addition, the location request may include positioning quality of service (QoS), and positioning QoS may include positioning accuracy and positioning delay.

Step 802: The location server determines to perform sidelink positioning for the target terminal.

Step 803: The location server obtains an anchor terminal participating in positioning.

The anchor terminal may be a terminal with a known location and participating in transmission of sidelink positioning reference signal, or the anchor terminal may be a terminal with a known location and participating in measurement of sidelink positioning reference signal.

That is, the anchor terminal (that is, anchor UE) is UE that provides positioning assistance, for example, sending or performing measurement on an SL PRS. For absolute positioning, the anchor UE is UE with a known location, or UE whose location can be obtained. There may be one or more anchor UEs. The anchor UE may alternatively be referred to as auxiliary UE, or (located) UE with a known location.

It should be noted that the anchor UE may or may not have a Uu interface with the network, for example, being outside the coverage of the network. A sidelink unicast connection may not be established between the target UE and the anchor UE; however, one of them can still send an SL PRS through the PC5 interface and the other may perform measurement on the SL PRS of the PC5 interface.

Step 804: The location server performs interaction with the target terminal and one or more anchor terminals separately, performs a sidelink positioning procedure, and obtains positioning measurement information.

The positioning measurement information may be a positioning measurement result of the SL PRS or may be an estimated location calculated based on the positioning measurement result of the SL PRS.

In addition, the location server may perform interaction with the anchor UE through the target UE, or may not forward through the target UE, but establish a new positioning session between the location server and the anchor UE to perform message exchanged directly (this part of content is described in detail below).

Step 805: The location server obtains location information of the target terminal based on the positioning measurement information.

The location information of the target terminal may include an absolute location, a relative location, or a range.

It can be learned from the foregoing steps 801 to 805 that, in this embodiment of this application, the location server can receive a location request for requesting to perform positioning for the target terminal, and determine to perform sidelink positioning for the target terminal, so as to determine one or more anchor terminals participating in positioning, so that the location server can separately perform interaction with the target terminal and the anchor terminal participating in positioning, perform the sidelink positioning procedure, and obtain the positioning measurement information. In this way, the location server can determine the location information of the target terminal of positioning based on the positioning measurement information. Therefore, in this embodiment of this application, the positioning procedure for the target terminal based on sidelink can be implemented through information interaction between the location server, the target terminal, and the anchor terminal, that is, sidelink positioning based on PC5 interface is implemented in this embodiment of this application.

Optionally, the determining, by the location server, to perform sidelink positioning for the target terminal includes:
obtaining, by the location server, sidelink positioning capability information of the target terminal; and
determining, by the location server, to perform sidelink positioning for the target terminal, in a case that the sidelink positioning capability information of the target terminal indicates that the target terminal supports sidelink positioning.

It can be learned from the foregoing that the location server can further obtain the sidelink positioning capability information of the target terminal, so as to determine to perform sidelink positioning for the target terminal in a case that it is determined based on the sidelink positioning capability information of the target terminal that the target terminal supports sidelink positioning. That is, in a case that the target terminal supports sidelink positioning, sidelink positioning is performed for the target terminal, thus reducing procedure overheads and reducing a probability of positioning failures.

In addition, the location request received by the location server may include positioning QoS, where the positioning QoS may include positioning accuracy and positioning delay. In this case, the location server may further evaluate a positioning result based on the Uu interface after receiving the location request. If the estimated positioning result based on the Uu interface does not meet the positioning accuracy and positioning delay, it is determined to perform sidelink positioning for the target terminal; or if the estimated location result based on the Uu interface meets the positioning accuracy and positioning delay, it is determined not to perform sidelink positioning for the target terminal.

It can be understood that after receiving the location request from the AMF, the location server may alternatively first initiate positioning based on Uu interface, and in a case that the positioning result based on Uu interface does not meet the positioning accuracy and positioning delay, determine to perform sidelink positioning for the target terminal, or in a case that the positioning result based on Uu interface meets the positioning accuracy and positioning delay, determine not to perform sidelink positioning for the target terminal.

Optionally, the determining, by the location server, one or more anchor terminals participating in positioning includes:
sending, by the location server, a first request message to the target terminal, where the first request message is used for requesting a candidate anchor terminal;
receiving, by the location server, a first response message corresponding to the first request message and sent by the target terminal, where the first response message includes a candidate anchor terminal list; and
determining, by the location server, one or more anchor terminals participating in positioning based on the candidate anchor terminal list.

After receiving the first request message, the target terminal may perform a candidate anchor terminal discovery procedure, so as to add the obtained candidate anchor terminal list to the first response message for the first request message and send it to the location server, or add a candidate anchor terminal discovered before reception of the first request message to the candidate terminal list.

Optionally, the first request message is a long term evolution positioning protocol LPP message or a sidelink positioning protocol message, and the first response message is a long term evolution positioning protocol LPP message or a sidelink positioning protocol message.

For example, the first request message may be a newly introduced LPP message (which is, for example, referred to as anchor terminal information request (Request Anchor UE Infor) message), or may be an existing LPP message in the related art, for example, an assistance data request (Request Assistance Data) message, where the message carries one piece of indication information for indicating to request an anchor terminal.

The sidelink positioning protocol is a protocol introduced for sidelink positioning.

It can be understood that the location server may not send the first request message to the target terminal, but the target terminal of positioning may actively report the candidate anchor terminal list to the location server.

Optionally, the first request message includes at least one of the following:
the maximum number of anchor terminals participating in a positioning procedure;
the minimum number of anchor terminals participating in a positioning procedure; and
a target condition to be met by an anchor terminal participating in a positioning procedure.

In a case that the first request message includes the maximum number, the target terminal generates a candidate anchor terminal list based on the maximum number, that is, the number of terminals in the candidate anchor terminal list is not greater than the maximum number;

In a case that the first request message includes the minimum number, the target terminal generates a candidate anchor terminal list based on the minimum number, that is, the number of terminals in the candidate anchor terminal list is not less than the minimum number;

In a case that the target condition is included in the first request message, the target terminal generates a candidate anchor terminal list based on the target condition, that is, the terminals in the candidate anchor terminal list are terminals meeting the target condition.

Optionally, the target condition includes at least one of the following:
item A-1: location information is known;
item A-2: location information is able to be obtained;
item A-3: having a specific sidelink positioning capability;
item A-4: being within network coverage;
item A-5: being within a specific area;
item A-6: being in a specified radio resource control RRC state;
item A-7: a PC5 interface resource is greater than a preset threshold;
item A-8: a sidelink unicast connection has been established to the target terminal; and
item A-9: being in a specified terminal list.

For the foregoing items A-1 and A-2, for example, when the absolute location of the target terminal needs to be obtained, the anchor terminal participating in positioning needs to be a terminal with a known location or a terminal whose location is able to be obtained. In this case, the target condition needs to include the foregoing item A-1 (that is, the location information is known) or A-2 (that is, the location information is able to be obtained).

The "specific sidelink positioning capability" in the foregoing item A-3 includes, for example, at least one of supporting a specific sidelink positioning method, supporting SL-PRS transmission, and supporting SL-PRS measurement.

The "specific area" in the foregoing item A-5 may be a coverage area of a cell or a cell in the cell list.

The "specified RRC state" in the foregoing item A-6 includes, for example, at least one of RRC connected state and RRC idle state.

For the foregoing item A-9, that is, one UE list may be included in the first request message. For example, UEs in these UE lists may be a road side unit (RSU) with a fixed location, and terminals in the candidate anchor terminal list provided by the target terminal need to be in the UE list.

Optionally, the first response message further includes first terminal information of the candidate anchor terminal, where the first terminal information includes at least one of the following:
item B-1: a terminal identifier;
item B-2: a terminal index;
item B-3: an RRC status;
item B-4: identification information of a serving cell;
item B-5: registered access and mobility management function AMF information;
item B-6: sidelink positioning capability information;
item B-7: a sidelink resource configuration;
item B-8: a sidelink resource allocation mode; and
item B-9: a resource scheduling type in a case that the sidelink resource allocation mode is mode 1.

For the foregoing item B-1, the terminal identifier may include at least one of a temporary UE identifier (SAE-Temporary Mobile Subscription Identifier, S-TMSI), an international mobile subscriber identity (IMSI), a subscription permanent identifier (SUPI), a cell-radio network temporary identifier (C-RNTI), an SL layer 2 ID, and an application layer UE ID.

For the foregoing item B-3, the RRC status may include at least one of RRC connected state, RRC idle state, and RRC inactive state.

For the foregoing item B-4, the identification information of the serving cell may include at least one of a frequency of the serving cell, a physical cell identifier (PCI), and a cell global identifier (CGI).

For the foregoing item B-5, the registered AMF information may include at least one of a current serving public land mobile network (PLMN) and an AMF ID of a registered AMF.

For the foregoing item B-6, the sidelink positioning capability information may include at least one of whether sidelink positioning reference signal (SL-PRS) transmission is supported, whether SL-PRS measurement is supported, a supported sidelink positioning method, and whether its own location can be provided.

For the foregoing item B-7, the sidelink resource configuration includes at least one of a currently used sidelink resource and a sidelink resource configured by the base station.

The foregoing item B-8 is used to indicate whether the sidelink resource allocation mode of the terminal is mode 1 (mode1) or mode 2 (mode2). For related introductions of mode 1 and mode 2, refer to the description above.

The foregoing item B-9 is used to indicate which of the following types is a resource scheduling type to be used when the sidelink resource allocation mode of the terminal is mode 1:
dynamic scheduling, that is, resources are dynamically scheduled by the base station;
configured grant type 1, that is, periodic resources configured by the base station can be used directly; and
configured grant type 2, that is, periodic resources configured by the base station can be used only after being activated by the base station).

It should be noted that the foregoing method of determining one or more anchor terminals participating in positioning by the location server may be implemented in this embodiment or may be implemented independently, which is not limited in this application.

Optionally, the performing, by the location server, interaction with the anchor terminal and performing a sidelink positioning procedure includes at least one of the following:
performing, by the location server, terminal information interaction with the anchor terminal and obtaining second terminal information of the anchor terminal;
performing, by the location server, positioning capability interaction with the anchor terminal and obtaining sidelink positioning capability information of the anchor terminal;
performing, by the location server, assistance data interaction with the anchor terminal and sending first assistance data to the anchor terminal; and
performing, by the location server, location information interaction with the anchor terminal and obtaining a first measurement result of the anchor terminal; where
the positioning measurement information includes the first measurement result.

In addition, the first assistance data is used to indicate an SL-PRS measurement configuration or an SL-PRS transmission configuration for sidelink positioning, and may include one or more of information such as a resource pool where the SL-PRS is located, a period of the SL-PRS, and a frequency domain resource position of the SL-PRS.

It should be noted that content included in the first terminal information and the second terminal information may be the same or different. If the first response message does not include the first terminal information, the location server may perform interaction with the anchor terminal participating in positioning, so that the location server obtains the second terminal information of the anchor terminal participating in positioning; if the content of the first terminal information and the second terminal information is different, and even if the first response message includes the first terminal information, the location server needs to perform interaction with the anchor terminal participating in positioning, so that the location server can obtain the second terminal information of the anchor terminal participating in positioning.

It can be learned from the above that the location server may perform interaction with the anchor terminal participating in positioning, for at least one of the second terminal information, the sidelink positioning capability information of the anchor terminal participating in positioning, the first assistance data, and the first measurement result.

Optionally, the second terminal information includes at least one of the following:
a sidelink resource configuration;
a sidelink resource allocation mode;
a resource scheduling type in a case that the sidelink resource allocation mode is mode 1;
identification information of a serving cell;
registered access and mobility management function AMF information; and
sidelink positioning capability information.

It should be noted that related descriptions of various information included in the second terminal information, reference may be made to the foregoing related descriptions of the items B-7, B-8, B-9, B-4, and B-6, and details are not repeated herein.

Optionally, the performing, by the location server, interaction with the target terminal and performing a sidelink positioning procedure includes at least one of the following:
performing, by the location server, terminal information interaction with the target terminal and obtaining third terminal information of the target terminal;
performing, by the location server, positioning capability interaction with the target terminal and obtaining sidelink positioning capability information of the target terminal;
performing, by the location server, assistance data interaction with the target terminal and sending second assistance data to the target terminal; and
performing, by the location server, location information interaction with the target terminal and obtaining a second measurement result of the target terminal; where
the positioning measurement information includes the second measurement result.

In addition, the second assistance data is used to indicate an SL-PRS measurement configuration or an SL-PRS transmission configuration for sidelink positioning, and may include one or more of information such as a resource pool where the SL-PRS is located, a period of the SL-PRS, and a frequency domain resource position of the SL-PRS.

It can be learned from the foregoing that the location server can perform interaction with the target terminal for at least one of the third terminal information, the second assistance data, and the second measurement result.

It should be noted that content included in the first terminal information and the third terminal information may be the same or different. If the first response message does not include the first terminal information, the location server may perform terminal information interaction with the target terminal, so that the location server obtains the third terminal information of the target terminal; if content of the first terminal information and the third terminal information is different, and even if the first response message includes the first terminal information, the location server also needs to perform terminal information interaction with the target terminal, so that the location server can obtain the third terminal information of the target terminal.

In addition, it should be noted that if the first assistance data and the second assistance data respectively indicate the target terminal to transmit a positioning reference signal and indicate the anchor terminal to perform measurement on the positioning reference signal, the target terminal then transmits the positioning reference signal, and the anchor terminal performs measurement on the positioning reference signal and reports a measurement result to the location server. If the first assistance data and the second assistance data respectively indicate the anchor terminal to transmit a positioning reference signal and indicate the target terminal to perform measurement on the positioning reference signal, the anchor terminal then transmits the positioning reference signal, and the target terminal performs measurement on the positioning reference signal and reports a measurement result to the location server.

Optionally, the third terminal information includes at least one of the following:
a sidelink resource configuration; and
a sidelink resource allocation mode.

It should be noted that related descriptions of various information included in the third terminal information, reference may be made to the foregoing related descriptions of the items B-7 and B-8 and details are not repeated herein.

It should be noted that the performing interaction with the anchor terminal by the location server and performing a sidelink positioning procedure may be implemented in this embodiment or may be implemented independently, which is not limited in this application.

In this embodiment of this application, an interaction manner between the location server and the anchor terminal participating in positioning may be specifically the following manner 1 or manner 2.

Manner 1: Optionally, the performing, by the location server, interaction with the anchor terminal includes:
performing, by the location server, interaction with the anchor terminal via the target terminal.

It should be noted that when there are multiple anchor terminals participating in positioning, the location server may perform interaction with each anchor terminal participating in positioning.

Optionally, the performing, by the location server, interaction with the anchor terminal via the target terminal includes at least one of the following:
the location server sends a second long term evolution positioning protocol LPP message to the target terminal, where the second LPP message includes identification information or an index of the anchor terminal and a first container, and the first container includes a first LPP message sent to the anchor terminal by the location server; and
the location server receives a fourth LPP message sent by the target terminal, where the fourth LPP message includes identification information or an index of the anchor terminal and a second container, and the second container includes a third LPP message sent by the anchor terminal to the location server.

It can be learned from the foregoing that when the location server needs to send a first LPP message to the anchor terminal, the location server first sends a second LPP message carrying the first LPP message to the target terminal, so that the target terminal sends a first message to the anchor terminal, where the first message includes a third container, and the third container includes the first LPP message. That is, the target terminal adds the first LPP message that the location server needs to send to the anchor terminal to the first message and sends it to the anchor terminal. Here, the first message is one of a PC5 RRC message, a PC5 signaling (that is, PC5-S) message, and a PC5 interface sidelink positioning protocol message.

In addition, when the anchor terminal needs to send a third LPP message to the location server, the anchor terminal first sends a second message to the target terminal of positioning, where the second message includes a fourth container, and the fourth container includes a third LPP message that the anchor terminal needs to send to the location server, so that the target terminal sends a fourth LPP message carrying the third LPP message to the location server. Here, the second message is one of a PC5 RRC message, a PC5-S message, and a PC5 interface sidelink positioning protocol message.

In addition, when the location server performs interaction with the anchor terminal via the target terminal, the target terminal is configured to forward a message, and if a message received by the target terminal includes a container, the target terminal may not decode the container. For example, after receiving the second LPP message, the target terminal may not decode the first container included in the second LPP message; and after receiving the second message, may neither decode the fourth container included in the second message.

Optionally, the second LPP message may be a newly introduced LPP message (for ease of description, also referred to as an anchor terminal message (anchor UE message) here, which is merely an example and of which a name is not limited), and the new LPP message is used to deliver an LPP message to be sent to the anchor terminal.

Optionally, the second LPP message may include an LPP message that the location server needs to send to one or more anchor terminals.

Optionally, for each anchor terminal, the second LPP message may include one or more LPP messages to be sent to the anchor terminal, thereby reducing the positioning delay and signaling overheads.

It should be noted that the target terminal may determine a corresponding anchor terminal based on the identifier or index of the anchor terminal in the second LPP message. If no sidelink unicast connection is established between the target terminal and the anchor terminal, the target terminal establishes a sidelink unicast connection to the anchor terminal; if the unicast connection establishment fails, the target terminal may alternatively send a failure message to the location server, where the failure message may carry a cause value for indicating a delivery failure or a unicast connection establishment failure. The anchor terminal that fails to establish a sidelink unicast connection with the target terminal cannot participate in the positioning procedure.

Manner 2: Optionally, the performing, by the location server, interaction with the anchor terminal includes:
determining, by the location server, a target AMF, where the target AMF is an AMF registered by the anchor terminal; and
performing, by the location server, interaction with the anchor terminal through the target AMF.

It should be noted here that when sending a message to the anchor terminal for the first time, the location server needs to determine an AMF registered by the anchor terminal (that is, the target AMF); and when a message needs to be sent to the anchor terminal again, the message that the location server needs to send to the anchor terminal can be directly forwarded through the target AMF.

That is, when the location server sends an LPP message to the anchor terminal for the first time (at that time, a positioning "channel" between the location server and the anchor terminal has not been established), the location server obtains a serving AMF of the anchor terminal based on the first terminal information carried in the first response message or the second terminal information obtained through terminal information interaction between the location server and the anchor terminal, for example, obtaining the serving AMF (that is, the target AMF) of the anchor terminal based on a CGI of the serving cell or registered AMF information.

Optionally, the performing, by the location server, interaction with the anchor terminal through the target AMF includes at least one of the following:
sending, by the location server, a third message to the target AMF, where the third message includes a positioning session identifier assigned to the anchor terminal by the location server, a fifth LPP message sent to the anchor terminal by the location server, and identification information of the anchor terminal; and
receiving, by the location server, a fourth message sent by the target AMF, where the fourth message includes a positioning session identifier of the anchor terminal and a sixth LPP message sent by the anchor terminal to the location server.

It can be learned from the foregoing that when the location server needs to send a fifth LPP message to the anchor terminal, the location server first sends a third message carrying the fifth LPP message, the identification information of the anchor terminal, and the positioning session identifier of the anchor terminal to the target AMF, so that the target AMF sends a first NAS message to the anchor terminal, where the first NAS message includes the fifth LPP message. That is, the target AMF adds the fifth LPP message that the location server needs to send to the anchor terminal to the first NAS message and sends it to the anchor terminal.

In the foregoing process, after receiving the third message, the target AMF may find a context of the anchor terminal in the target AMF based on the identification information of the anchor terminal included in the third message, and save the positioning session identifier of the anchor terminal included in the third message. In addition, based on the context of the anchor terminal, if the anchor terminal is in a CM-IDLE state, the target AMF initiates a paging procedure to make the anchor terminal enter a CM-CONNECTED state, so that after the anchor terminal enters the CM-CONNECTED state, the target AMF sends the first NAS message to the anchor terminal.

In addition, when the anchor terminal needs to send a sixth LPP message to the location server, the anchor terminal first sends a second NAS message to the target AMF, where the second NAS message includes the sixth LPP message, so that the target AMF sends a fourth message carrying the sixth LPP message and the positioning session identifier of the anchor terminal to the location server. Based on the session identifier included in the fourth message, the location server may determine which terminal sends the sixth LPP message.

It should be noted that the interaction manner between the location server and the anchor terminal participating in positioning may be implemented in this embodiment or may be implemented independently, that is, the manner 1 may be implemented as an independent embodiment, and the manner 2 may also be implemented as an independent embodiment.

In a second aspect, as shown in FIG. 9, an embodiment of this application provides a positioning method, where the method may include the following steps.

Step 901: A target terminal receives a first request message sent by a location server.

The first request message is used for requesting a candidate anchor terminal.

The location server is a network device, for example, may be an LMF. The LMF is a network node providing a location service function. The target terminal (that is, target UE) is target UE for positioning. For positioning, an absolute location, a relative location, or a range of the UE needs to be obtained.

The target terminal is a target terminal for sidelink positioning, and the anchor terminal may be a terminal with a known location and participating in transmission of sidelink positioning reference signal, or the anchor terminal is a terminal with a known location and participating in measurement of sidelink positioning reference signal.

That is, the anchor terminal (that is, anchor UE) is UE that provides positioning assistance, for example, sending or performing measurement on an SL PRS. For absolute positioning, the anchor UE is UE with a known location, or UE whose location can be obtained. There may be one or more anchor UEs. The anchor UE may alternatively be referred to as auxiliary UE, or (located) UE with a known location.

It should be noted that the anchor UE may or may not have a Uu interface with the network, for example, being outside the coverage of the network. A sidelink unicast connection may not be established between the target UE and the anchor UE; however, one of them can still send an SL PRS through the PC5 interface and the other may perform measurement on the SL PRS of the PC5 interface.

Step 902: The target terminal performs a candidate anchor terminal discovery procedure to obtain a candidate anchor terminal list.

The candidate anchor terminal is an anchor terminal that can participate in positioning. The candidate anchor terminal list includes identification information of at least one candidate anchor terminal.

Step 903: The target terminal sends a first response message for the first request message to the location server.

The first response message includes the candidate anchor terminal list.

It can be learned from the foregoing that after receiving the first request message, the target terminal performs a candidate anchor terminal discovery procedure, so that the obtained candidate anchor terminal list is carried in the first response message of the first request message and sent to the location server. It can be understood that the target terminal may alternatively add a candidate anchor terminal found before reception of the first request message to the candidate terminal list.

Optionally, the first request message is a long term evolution positioning protocol LPP message or a sidelink positioning protocol message, and the first response message is a long term evolution positioning protocol LPP message or a sidelink positioning protocol message.

For example, the first request message may be a newly introduced LPP message (which is, for example, referred to as anchor terminal information request (Request Anchor UE Infor) message), or may be an existing LPP message in the related art, for example, an assistance data request (Request Assistance Data) message, where the message carries one piece of indication information for indicating to request an anchor terminal.

The sidelink positioning protocol is a protocol introduced for sidelink positioning.

It can be understood that the target terminal of positioning may alternatively pro-actively report a candidate anchor terminal list to the location server in a case that the first request message sent by the location server has not been received.

It can be learned from the foregoing steps 901 to 903 that, in this embodiment of this application, after receiving the first request message, the target terminal performs an anchor terminal discovery procedure, so that the obtained candidate anchor terminal list is carried in the first response message of the first request message and sent to the location server, so that the location server can determine, based on the candidate terminal list, one or more anchor terminals participating in positioning, and then the server performs interaction with the target terminal and the anchor terminal participating in the positioning, performs a sidelink positioning procedure, and obtains the positioning measurement information. In this way, the location server can determine the location information of the target terminal of positioning based on the positioning measurement information. Therefore, in this embodiment of this application, the positioning procedure for the target terminal based on sidelink can be implemented through information interaction between the location server, the target terminal, and the anchor terminal, that is, sidelink positioning based on PC5 interface is implemented in this embodiment of this application.

Optionally, the first request message includes at least one of the following:
the maximum number of anchor terminals participating in a positioning procedure;
the minimum number of anchor terminals participating in a positioning procedure; and
a target condition to be met by an anchor terminal participating in a positioning procedure.

In a case that the first request message includes the maximum number, the target terminal generates a candidate anchor terminal list based on the maximum number, that is, the number of terminals in the candidate anchor terminal list is not greater than the maximum number;

In a case that the first request message includes the minimum number, the target terminal generates a candidate anchor terminal list based on the minimum number, that is, the number of terminals in the candidate anchor terminal list is not less than the minimum number;

In a case that the target condition is included in the first request message, the target terminal generates a candidate anchor terminal list based on the target condition, that is, the terminals in the candidate anchor terminal list are terminals meeting the target condition.

Optionally, the target condition includes at least one of the following:
item A-1: location information is known;
item A-2: location information is able to be obtained;
item A-3: having a specific sidelink positioning capability;
item A-4: being within network coverage;
item A-5: being within a specific area;
item A-6: being in a specified radio resource control RRC state;
item A-7: a PC5 interface resource is greater than a preset threshold;
item A-8: a sidelink unicast connection has been established to the target terminal; and
item A-9: being in a specified terminal list.

For the foregoing items A-1 and A-2, for example, when the absolute location of the target terminal needs to be obtained, the anchor terminal participating in positioning needs to be a terminal with a known location or a terminal whose location is able to be obtained. In this case, the target condition needs to include the foregoing item A-1 (that is, the location information is known) or A-2 (that is, the location information is able to be obtained).

The "specific sidelink positioning capability" in the foregoing item A-3 includes, for example, at least one of supporting a specific sidelink positioning method, supporting SL-PRS transmission, and supporting SL-PRS measurement.

The "specific area" in the foregoing item A-5 may be a coverage area of a cell or a cell in the cell list.

The "specified RRC state" in the foregoing item A-6 includes, for example, at least one of RRC connected state and RRC idle state.

For the foregoing item A-9, that is, one UE list may be included in the first request message. For example, UEs in these UE lists may be a road side unit (RSU) with a fixed location, and terminals in the candidate anchor terminal list provided by the target terminal need to be in the UE list.

Optionally, the first response message further includes first terminal information of the candidate anchor terminal, where the first terminal information includes at least one of the following:
a terminal identifier;
a terminal index;
an RRC status;
identification information of a serving cell;
registered access and mobility management function AMF information;
sidelink positioning capability information;
a sidelink resource configuration;
a sidelink resource allocation mode; and
a resource scheduling type in a case that the sidelink resource allocation mode is mode 1.

item B-1: a terminal identifier;
item B-2: a terminal index;
item B-3: an RRC status;
item B-4: identification information of a serving cell;
item B-5: registered access and mobility management function AMF information;
item B-6: sidelink positioning capability information;
item B-7: a sidelink resource configuration;
item B-8: a sidelink resource allocation mode; and
item B-9: a resource scheduling type in a case that the sidelink resource allocation mode is mode 1.

For the foregoing item B-1, the terminal identifier may include at least one of a temporary UE identifier (SAE-Temporary Mobile Subscription Identifier, S-TMSI), an international mobile subscriber identity (IMSI), a subscription permanent identifier (SUPI), a cell-radio network temporary identifier (C-RNTI), an SL layer 2 ID, and an application layer UE ID.

For the foregoing item B-3, the RRC status may include at least one of RRC connected state, RRC idle state, and RRC inactive state.

For the foregoing item B-4, the identification information of the serving cell may include at least one of a frequency of the serving cell, a physical cell identifier (PCI), and a cell global identifier (CGI).

For the foregoing item B-5, the registered AMF information may include at least one of a current serving public land mobile network (PLMN) and an AMF ID of a registered AMF.

For the foregoing item B-6, the sidelink positioning capability information may include at least one of whether sidelink positioning reference signal (SL-PRS) transmission is supported, whether SL-PRS measurement is supported, a supported sidelink positioning method, and whether its own location can be provided.

For the foregoing item B-7, the sidelink resource configuration includes at least one of a currently used sidelink resource and a sidelink resource configured by the base station.

The foregoing item B-8 is used to indicate whether the sidelink resource allocation mode of the terminal is mode 1 (mode1) or mode 2 (mode2). For related introductions of mode 1 and mode 2, refer to the description above.

The foregoing item B-9 is used to indicate which of the following types is a resource scheduling type to be used when the sidelink resource allocation mode of the terminal is mode 1:
dynamic scheduling, that is, resources are dynamically scheduled by the base station;
configured grant type 1, that is, periodic resources configured by the base station can be used directly; and
configured grant type 2, that is, periodic resources configured by the base station can be used only after being activated by the base station).

The sidelink resource configuration of the anchor UE includes a sidelink resource currently used by the anchor UE and/or a sidelink resource configured by the base station for the anchor UE.

Optionally, the method further includes at least one of the following:
performing, by the target terminal, terminal information interaction with the location server and sending third terminal information of the target terminal to the location server;
performing, by the target terminal, positioning capability interaction with the location server and sending sidelink positioning capability information of the target terminal to the location server;
performing, by the target terminal, assistance data interaction with the location server and obtaining second assistance data sent by the location server; and
performing, by the location server, location information interaction with the target terminal and sending a second measurement result of the target terminal to the location server.

In addition, the second assistance data is used to indicate a sidelink positioning measurement configuration. For content included in the second assistance data, reference may be made to the descriptions above, and details are described here again.

It should be noted that content included in the first terminal information and the third terminal information may be the same or different. If the first response message does not include the first terminal information, the location server may perform terminal information interaction with the target terminal, so that the location server obtains the third terminal information of the target terminal; if content of the first terminal information and the third terminal information is different, and even if the first response message includes the first terminal information, the location server also needs to perform terminal information interaction with the target terminal, so that the location server can obtain the third terminal information of the target terminal.

It can be learned from the foregoing that the target terminal may perform interaction with the location server for at least one of the third terminal information, the second assistance data, and the second measurement result.

It can be understood that the process of performing interaction with the location server by the target terminal for at least one of the third terminal information, the second assistance data, and the second measurement result may not depend on the foregoing steps 901 to 903, that is, the process may be implemented independently.

Optionally, the third terminal information includes at least one of the following:
a sidelink resource configuration; and
a sidelink resource allocation mode.

It should be noted that related descriptions of various information included in the third terminal information, reference may be made to the foregoing related descriptions of the items B-7 and B-8 and details are not repeated herein.

Optionally, the method further includes:
forwarding, by the target terminal, a message exchanged between the location server and one or more anchor terminals participating in positioning.

It can be understood that the process of forwarding by the target terminal a message exchanged between the location server and one or more anchor terminals participating in positioning may not depend on the foregoing steps 901 to 903, that is, the process may be implemented independently.

Optionally, the forwarding, by the target terminal, a message exchanged between the location server and the anchor terminal includes:
receiving, by the target terminal, a second long term evolution positioning protocol LPP message sent by the location server, where the second LPP message includes identification information or an index of the anchor terminal and a first container, and the first container includes a first LPP message sent to the anchor terminal by the location server; and
determining, by the target terminal, the anchor terminal based on the identification information or index of the anchor terminal, and sending a first message to the anchor terminal, where the first message includes a third container, and the third container includes the first LPP message.

It can be learned from the foregoing that when the location server needs to send a first LPP message to the anchor terminal, the location server first sends a second LPP message carrying the first LPP message to the target terminal, so that the target terminal sends a first message to the anchor terminal, where the first message includes a third container, and the third container includes the first LPP message. That is, the target terminal adds the first LPP message that the location server needs to send to the anchor terminal to the first message and sends it to the anchor terminal. Here, the first message is one of a PC5 RRC message, a PC5 signaling (that is, PC5-S) message, and a PC5 interface sidelink positioning protocol message.

Optionally, the second LPP message may be a newly introduced LPP message (for ease of description, also referred to as an anchor terminal message (anchor UE message) here, which is merely an example and of which a name is not limited), and the new LPP message is used to deliver an LPP message to be sent to the anchor terminal.

Optionally, the second LPP message may include an LPP message that the location server needs to send to one or more anchor terminals.

Optionally, for each anchor terminal, the second LPP message may include one or more LPP messages to be sent to the anchor terminal, thereby reducing the positioning delay and signaling overheads.

Optionally, the forwarding, by the target terminal, a message exchanged between the location server and the anchor terminal further includes:
receiving, by the target terminal, a second message sent by the anchor terminal, where the second message includes a fourth container, and the fourth container includes a third LPP message sent by the anchor terminal to the location server; and
sending, by the target terminal of positioning, a fourth LPP message to the location server, where the fourth LPP message includes identification information or an index of the anchor terminal and a second container, and the second container includes the third LPP message.

It can be learned from the foregoing that when the anchor terminal needs to send a third LPP message to the location server, the anchor terminal first sends a second message to the target terminal of positioning, where the second message includes a fourth container, and the fourth container includes the third LPP message that the anchor terminal needs to send to the location server, so that the target terminal sends a fourth LPP message carrying the third LPP message to the location server. Here, the second message is one of a PC5 RRC message, a PC5-S message, and a PC5 interface sidelink positioning protocol message.

When the location server performs interaction with the anchor terminal via the target terminal, the target terminal is configured to forward a message, and if a message received by the target terminal includes a container, the target terminal may not decode the container. For example, after receiving the second LPP message, the target terminal may not decode the first container included in the second LPP message; and after receiving the second message, may neither decode the fourth container included in the second message.

Optionally, the method further includes:
establishing, by the target terminal, a sidelink unicast connection to the anchor terminal in a case that no sidelink unicast connection is established between the target terminal and the anchor terminal; and
the forwarding, by the target terminal, a message exchanged between the location server and the anchor terminal includes:
   forwarding, by the target terminal through the sidelink unicast connection between the target terminal and the anchor terminal, the message exchanged between the location server and the anchor terminal.

Optionally, the method further includes:
in a case that no sidelink unicast connection is established between the target terminal and the anchor terminal, directly forwarding, by the target terminal, the message exchanged between the location server and the anchor terminal. Optionally, the method further includes:
in a case that the sidelink unicast connection between the target terminal and the anchor terminal fails, sending, by the target terminal, a failure message to the location server.

It can be learned from the foregoing that, in this embodiment of this application, if no sidelink unicast connection is established between the target terminal and the anchor terminal, the target terminal establishes a sidelink unicast connection to the anchor terminal; if the unicast connection establishment fails, the target terminal may alternatively send a failure message to the location server, where the failure message may carry a cause value for indicating a delivery failure or a unicast connection establishment failure. The anchor terminal that fails to establish a sidelink unicast connection with the target terminal cannot participate in the positioning procedure.

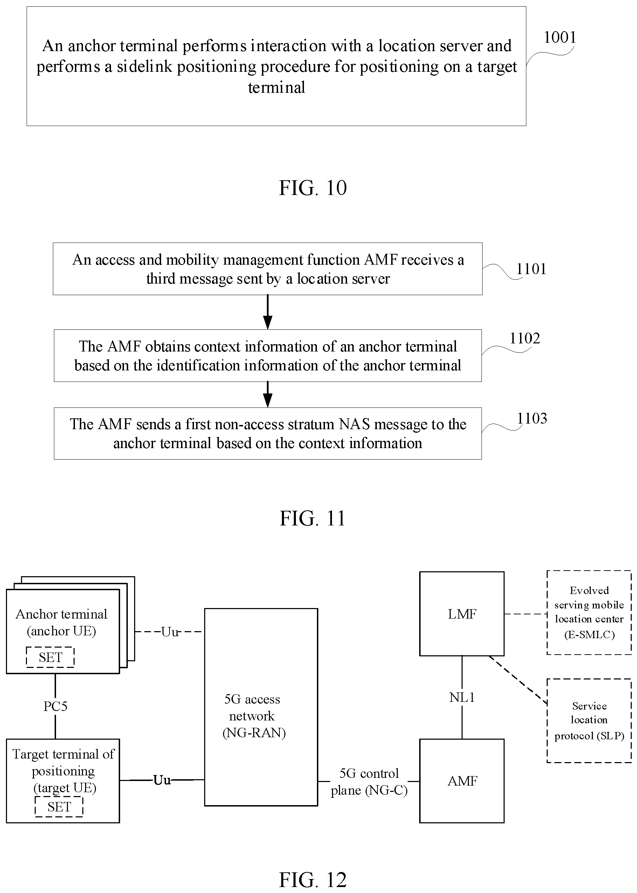

In a third aspect, as shown in FIG. 10, an embodiment of this application provides a positioning method, where the method may include the following steps.

Step 1001: An anchor terminal performs interaction with a location server and performs a sidelink positioning procedure for positioning on a target terminal.

In this embodiment of this application, the location server may receive a location request and determine to perform sidelink positioning for the target terminal, so as to determine one or more anchor terminals participating in positioning. In this way, the location server can perform interaction separately with the target terminal and the anchor terminals participating in positioning, perform a sidelink positioning procedure, and obtain positioning measurement information, so that the location server determines location information of the target terminal of positioning based on the positioning measurement information. Therefore, in this embodiment of this application, the positioning procedure for the target terminal based on sidelink can be implemented through information interaction between the location server, the target terminal, and the anchor terminal, that is, sidelink positioning based on PC5 interface is implemented in this embodiment of this application.

The location request is used to request to perform positioning for a target terminal.

In addition, the location server is a network-side device, for example, may be an LMF. The LMF is a network node providing a location service function. The target terminal (that is, target UE) is target UE for positioning. For positioning, an absolute location, a relative location, or a range of the UE needs to be obtained.

The anchor terminal may be a terminal with a known location and participating in transmission of sidelink positioning reference signal, or the anchor terminal is a terminal with a known location and participating in measurement of sidelink positioning reference signal.

That is, the anchor terminal (that is, anchor UE) is UE that provides positioning assistance, for example, sending or performing measurement on an SL PRS. For absolute positioning, the anchor UE is UE with a known location, or UE whose location can be obtained. There may be one or more anchor UEs. The anchor UE may alternatively be referred to as auxiliary UE, or (located) UE with a known location.

It should be noted that the anchor UE may or may not have a Uu interface with the network, for example, being outside the coverage of the network. A sidelink unicast connection may not be established between the target UE and the anchor UE; however, one of them can still send an SL PRS through the PC5 interface and the other may perform measurement on the SL PRS of the PC5 interface.

Optionally, the performing, by an anchor terminal, interaction with a location server and performing a sidelink positioning procedure for positioning on a target terminal includes at least one of the following:
performing, by the anchor terminal, terminal information interaction with the location server and sending second terminal information of the anchor terminal to the location server;
performing, by the anchor terminal, positioning capability interaction with the location server and sending sidelink positioning capability information of the anchor terminal to the location server;
performing, by the anchor terminal, assistance data interaction with the location server and obtaining first assistance data sent by the location server; and
performing, by the anchor terminal, location information interaction with the location server and sending a first measurement result of the anchor terminal to the location server;

In addition, the first assistance data is used to indicate a sidelink positioning measurement configuration. For content included in the first assistance data, reference may be made to the descriptions above, and details are described here again.

It can be seen from the foregoing that the anchor terminal may perform interaction with the location server, for at least one of the second terminal information, the sidelink positioning capability information of the anchor terminal participating in positioning, the first assistance data, and the first measurement result.

Optionally, the second terminal information includes at least one of the following:
a sidelink resource configuration;
a sidelink resource allocation mode;
a resource scheduling type in a case that the sidelink resource allocation mode is mode 1;
identification information of a serving cell;
registered access and mobility management function AMF information; and
sidelink positioning capability information.

The sidelink resource configuration includes at least one of a currently used sidelink resource and a sidelink resource configured by the base station.

The sidelink resource allocation mode is used to indicate whether the sidelink resource allocation mode of the terminal is mode 1 (mode 1) or mode 2 (mode 2). For related introductions of mode 1 and mode 2, refer to the description above.

The resource scheduling type in a case that the sidelink resource allocation mode is mode 1 indicates which of the following types is a resource scheduling type to be used when the sidelink resource allocation mode of the terminal is mode 1:
dynamic scheduling, that is, resources are dynamically scheduled by the base station;
configured grant type 1, that is, periodic resources configured by the base station can be used directly; and
configured grant type 2, that is, periodic resources configured by the base station can be used only after being activated by the base station).

The identification information of the serving cell may include at least one of a frequency of the serving cell, a physical cell identifier (PCI), and a cell global identifier (CGI).

The sidelink positioning capability information may include at least one of whether sidelink positioning reference signal (SL-PRS) transmission is supported, whether SL-PRS measurement is supported, a supported sidelink positioning method, and whether its own location can be provided.

In this embodiment of this application, the interaction manner between the anchor terminal participating in positioning and the location server may be specifically the following manner 1 or manner 2.

Manner 1: Optionally, interaction between the anchor terminal and the location server includes:
performing, by the anchor terminal, interaction with the location server through the target terminal.

Optionally, the performing, by the anchor terminal, interaction with the location server through the target terminal includes at least one of the following:
receiving, by the anchor terminal, a first message sent by the target terminal, where the first message includes a third container, and the third container includes a first LPP message sent by the location server to the anchor terminal; and
sending, by the anchor terminal, a second message to the target terminal, where the second message includes a fourth container, and the fourth container includes a third LPP message sent by the anchor terminal to the location server.

It can be learned from the foregoing that when the location server needs to send a first LPP message to the anchor terminal, the location server first sends a second LPP message carrying the first LPP message to the target terminal, so that the target terminal sends a first message to the anchor terminal, where the first message includes a third container, and the third container includes the first LPP message. That is, the target terminal adds the first LPP message that the location server needs to send to the anchor terminal to the first message and sends it to the anchor terminal. Here, the first message is one of a PC5 RRC message, a PC5 signaling (that is, PC5-S) message, and a PC5 interface sidelink positioning protocol message.

In addition, when the anchor terminal needs to send a third LPP message to the location server, the anchor terminal first sends a second message to the target terminal of positioning, where the second message includes a fourth container, and the fourth container includes a third LPP message that the anchor terminal needs to send to the location server, so that the target terminal sends a fourth LPP message carrying the third LPP message to the location server. Here, the second message is one of a PC5 RRC message, a PC5-S message, and a PC5 interface sidelink positioning protocol message.

Manner 2: Optionally, interaction between the anchor terminal and the location server includes:
performing, by the anchor terminal, interaction with the location server through a target AMF, where the target AMF is an AMF registered by the anchor terminal.

Optionally, the performing, by the anchor terminal, interaction with the location server through a target AMF includes at least one of the following:
receiving, by the anchor terminal, a first non-access stratum NAS message sent by the target AMF, where the first non-access stratum NAS message includes a fifth LPP message sent by the location server to the anchor terminal; and
sending, by the anchor terminal, a second NAS message to the target terminal, where the second NAS message includes a sixth LPP message sent by the anchor terminal to the location server.

It can be learned from the foregoing that when the location server needs to send a fifth LPP message to the anchor terminal, the location server first sends a third message carrying the fifth LPP message, the identification information of the anchor terminal, and the positioning session identifier of the anchor terminal to the target AMF, so that the target AMF sends a first NAS message to the anchor terminal, where the first NAS message includes the fifth LPP message. That is, the target AMF adds the fifth LPP message that the location server needs to send to the anchor terminal to the first NAS message and sends it to the anchor terminal.

In addition, when the anchor terminal needs to send a sixth LPP message to the location server, the anchor terminal first sends a second NAS message to the target AMF, where the second NAS message includes the sixth LPP message, so that the target AMF sends a fourth message carrying the sixth LPP message and the positioning session identifier of the anchor terminal to the location server. Based on the session identifier included in the fourth message, the location server may determine which terminal sends the sixth LPP message.

It should be noted that the interaction manner between the anchor terminal participating in positioning and the location server may be implemented in this embodiment or may be implemented independently, that is, the manner 1 may be implemented as an independent embodiment, and the manner 2 may also be implemented as an independent embodiment.

In a fourth aspect, as shown in FIG. 11, an embodiment of this application provides a positioning method, where the method may include the following steps.

Step 1101: An access and mobility management function AMF receives a third message sent by a location server.

The third message includes identification information of an anchor terminal and a fifth LPP message sent to the anchor terminal by the location server, and the AMF is an AMF registered by the anchor terminal.

Step 1102: The AMF obtains context information of the anchor terminal based on the identification information of the anchor terminal.

Step 1103: The AMF sends a first non-access stratum NAS message to the anchor terminal based on the context information.

The first NAS message includes the fifth LPP message.

Optionally, the anchor terminal may be a terminal with a known location and participating in transmission of sidelink positioning reference signal, or the anchor terminal may be a terminal with a known location and participating in measurement of sidelink positioning reference signal.

It can be learned from the foregoing that when the location server needs to send a fifth LPP message to the anchor terminal, the location server first sends a third message carrying the fifth LPP message and the identification information of the anchor terminal to the AMF, so that the AMF sends a first NAS message to the anchor terminal, where the first NAS message includes the fifth LPP message. That is, the AMF adds the fifth LPP message that the location server needs to send to the anchor terminal to the first NAS message and sends it to the anchor terminal.

Optionally, the sending, by the AMF, a first NAS message to the anchor terminal based on the context information includes:
in a case that the AMF determines, based on the context information of the anchor terminal, that the anchor terminal is in a connection management-idle state, paging, by the AMF, the anchor terminal to make the anchor terminal enter a connection management-connected state; and
after the anchor terminal enters the connection management-connected state, sending, by the AMF, the first NAS message to the anchor terminal.

When the anchor terminal is in a connection management-connected state, the AMF directly sends the first NAS message to the anchor terminal.

It can be learned from the foregoing that, in this embodiment of this application, after receiving the third message, the AMF can find a context of the anchor terminal in the AMF based on the identification information of the anchor terminal included in the third message. In addition, based on the context of the anchor terminal, if the anchor terminal is in a CM-IDLE state, the AMF initiates a paging procedure to make the anchor terminal enter a CM-CONNECTED state, so that after the anchor terminal enters the CM-CONNECTED state, the AMF sends the first NAS message to the anchor terminal.

Optionally, the third message further includes a positioning session identifier allocated to the anchor terminal by the location server.

Optionally, the method further includes:
storing, by the AMF, a positioning session identifier of the anchor terminal;
receiving, by the AMF, a second NAS message sent by the anchor terminal, where the second NAS message includes a sixth LPP message sent by the anchor terminal to the location server; and
sending, by the AMF, a fourth message to the location server, where the fourth message includes the positioning session identifier of the anchor terminal and the sixth LPP message.

It should be noted that when the location server needs to send an LPP message to the anchor terminal subsequently, a message sent by the location server to the AMF may not carry the identification information of the anchor terminal, but carry the positioning session identifier of the anchor terminal, and the AMF obtains the context of the anchor terminal through association with the positioning session identifier of the anchor terminal, and then sends the LPP message to the anchor terminal.

It can be learned from the foregoing that, in this embodiment of this application, when the anchor terminal needs to send a sixth LPP message to the location server, the anchor terminal first sends a second NAS message to the AMF, where the second NAS message includes the sixth LPP message, so that the AMF sends a fourth message carrying the sixth LPP message and the positioning session identifier of the anchor terminal to the location server. Based on the session identifier included in the fourth message, the location server may determine which terminal sends the sixth LPP message.

To sum up, the positioning method in this embodiment of this application can be applied to the architecture diagram shown in FIG. 12, and specific implementations are as follows.

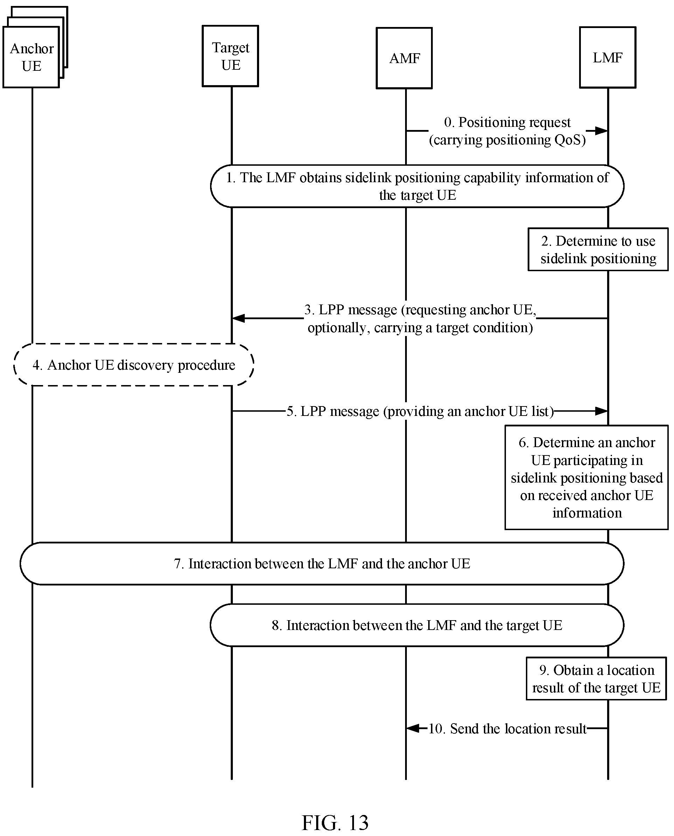

Specifically, the procedure of the positioning method applied to FIG. 12 may be shown in FIG. 13, that is, may include the following steps 0 to 9:
Step 0: The LMF receives a location request from the AMF, where the location request carries positioning quality of service (QoS), where the positioning QoS may include positioning accuracy and positioning delay.
Step 1: The LMF obtains sidelink positioning capability information of target UE.

The LMF may send a capability request to the target UE, so that the target UE can return an LPP message carrying the sidelink positioning capability information of the target UE; or, the LMF does not need to request the target UE, and the target UE pro-actively reports an LPP message carrying the sidelink positioning capability information of the target UE to the LMF.

In addition, the LPP message carrying the sidelink positioning capability information of the target UE may be an LPP message in extended related technologies, such as a capability provide (ProvideCapabilities) message, an information element related to the sidelink positioning capability is introduced to the message; or, a new LPP message may be introduced, and for example, is referred to as a sidelink capability provide (ProvideCapabilitiesSidelink) message, where the message includes the sidelink positioning capability information of the target UE.

Step 2: In a case that the sidelink positioning capability information of the target UE indicates that the target UE supports sidelink positioning, the LMF may determine to use sidelink positioning.

In a case that the Uu interface-based positioning does not meet the positioning QoS, the LMF may alternatively use sidelink positioning.

That is, after receiving a location request, the LMF may first initiate positioning based on Uu interface, and may use sidelink positioning in a case that a positioning result based on Uu interface does not meet the positioning accuracy and positioning delay.

Alternatively, after receiving the location request, the LMF may evaluate a Uu-based positioning result based on the positioning capability information of target UE, and may use sidelink positioning in a case that an evaluation result does not meet the positioning accuracy and positioning delay.

Step 3: The LMF sends an LPP message to the target UE, for requesting the target UE to provide candidate anchor UE.

Optionally, the LPP message may include the maximum number of anchor UEs (to reduce overheads) or the minimum number of anchor UEs (to ensure positioning QoS).

Optionally, the LPP message may further include a target condition, which is used to indicate a condition that the candidate anchor UE needs to meet.

The target condition includes at least one of the following:
location information is known;
location information is able to be obtained;
having a specific sidelink positioning capability; (for example, including at least one of supporting a specific sidelink positioning method, supporting SL-PRS transmission, and supporting SL-PRS measurement);
being within network coverage;
being within a specific area; (the specific area may be a cell or a cell list)
being in a specified radio resource control RRC state; (the RRC state includes, for example, at least one of RRC connected state and RRC idle state.)
a PC5 interface resource is greater than a preset threshold;
a sidelink unicast connection has been established to the target terminal; and
being in a specified terminal list (that is, the LPP message in this step includes a UE list, for example, UEs in these UE lists may be a road side unit (RSU) with a fixed location).

The target condition can enable the LMF to obtain an anchor UE suitable for the current sidelink positioning.

The LPP message in this step may be a newly introduced LPP message (which is, for example, referred to as anchor terminal information request (Request Anchor UE Infor) message), or may be an existing LPP message in the related art, for example, an assistance data request (Request Assistance Data) message, where the message carries one piece of indication information for indicating to request an anchor UE.

Step 4: The target UE performs an anchor UE discovery procedure to find the anchor UE.

Optionally, the anchor UEs are UEs that meet the foregoing target condition.

Step 5: The target UE sends a response message to the LMF, where the response message carries an anchor UE list.

Optionally, for each anchor UE, the response message may further carry corresponding anchor UE information.

Here, the anchor UE information includes one or a combination of any one of the following items:
an UE ID of the anchor UE may, for example, include at least one of a temporary UE identifier (SAE-Temporary Mobile Subscriber Identity, S-TMSI), an international mobile subscriber identity (IMSI), a subscription permanent identifier (SUPI), a cell-radio network temporary identifier (C-RNTI), an SL layer2 ID, and an application layer UE ID;
a UE index of the anchor UE;
an RRC status of the anchor UE (which may include at least one of RRC connected state, RRC idle state, and RRC inactive state);
serving cell ID of the anchor UE (which may include at least one of a frequency of the serving cell, a physical cell identifier (PCI), and a cell global identifier (CGI);
information about an AMF registered by the anchor UE (which may include at least one of a current serving public land mobile network (PLMN) and an AMF ID of the registered AMF;
sidelink positioning capability of the anchor UE (which may include at least one of whether sidelink positioning reference signal (SL-PRS) transmission is supported, whether SL-PRS measurement is supported, a supported sidelink positioning method, and whether its own location can be provided;
a sidelink resource configuration or resource allocation mode of the anchor UE, where for example, the resource allocation mode includes: mode 1 or mode 2, and mode 1 may further include a specific type of the following:
   dynamic scheduling, that is, resources are dynamically scheduled by the base station;
   configured grant type 1, that is, periodic resources configured by the base station can be used directly; and
   configured grant type 2, that is, periodic resources configured by the base station can be used only after being activated by the base station).

The sidelink resource configuration of the anchor UE includes a sidelink resource currently used by the anchor UE and/or a sidelink resource configured by the base station for the anchor UE.

Step 6: The LMF determines an anchor UE participating in sidelink positioning based on the received anchor UE information.

Step 7: The LMF performs LPP message interaction with the anchor UE participating in sidelink positioning;

A specific interaction method in step 7 is implemented in two manners, which will be further introduced in the following content.

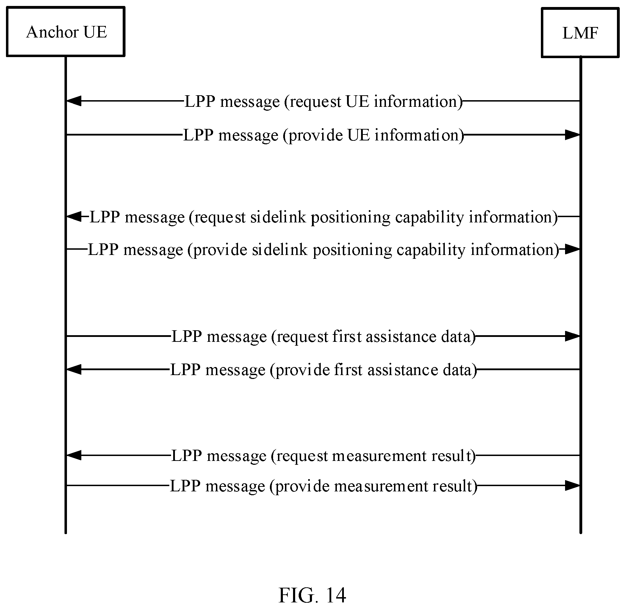

In addition, as shown in FIG. 14, the content of LPP message interaction between the LMF and the anchor UE participating in sidelink positioning may include one or a combination of the following LPP processes (that is, 7-1 to 7-4):
7-1: UE information interaction process, that is, the LMF obtains UE information of the anchor UE. The process may include: the LMF sends an LPP message (such as a UE information request (Request UE Information)) to the anchor UE, where the message is used to request to obtain information of the UE, and the anchor UE sends a response message to the LMF, carrying corresponding UE information, where the UE information here includes the following 7-1.1 to 7-1.4.

Item 7-1.1: Sidelink resource configuration or resource allocation mode of the anchor UE, for example, the resource allocation mode includes: mode 1 or mode 2, and mode 1 may further include a specific type of the following: dynamic scheduling, that is, resources are dynamically scheduled by the base station; configured grant type 1, that is, periodic resources configured by the base station can be used directly; and configured grant type 2, that is, periodic resources configured by the base station can be used only after being activated by the base station).

Item 7-1.2: Serving cell ID of the UE, such as a frequency of the serving cell, a PCI, or a CGI.

Item 7-1.3: Sidelink positioning capability of UE, for example, whether SL-PRS transmission is supported, whether SL-PRS measurement is supported, a supported sidelink positioning method, and whether its own location can be provided.

Item 7-1.4: Information about an AMF registered by the UE (which may include at least one of a current serving public land mobile network (PLMN) and an AMF ID of a registered AMF.

Based on the obtained information of the anchor UE, the LMF may select an anchor UE participating in sidelink positioning, determine an SL PRS configuration, and so on.

7-2: Positioning capability interaction procedure, that is, the LMF obtains sidelink positioning capability information of the anchor UE. The process may include: the LMF sends a capability request (Request Capabilities) message to the anchor UE, and the anchor UE sends a capability provide (Provide Capabilities) message to the LMF, where the message carries a capability related to sidelink positioning. It should be noted that there may be no independent positioning capability interaction process and the sidelink positioning capability may be exchanged in the UE information interaction process.

7-3: Assistance data interaction process, that is, the LMF provides first assistance data to the anchor UE. The process may include: the LMF sends an assistance data provide (Provide Assistance Data) message to the anchor UE, and optionally, before this, the anchor UE sends an assistance data request (Request Assistance Data) message to the LMF.

For specific content included in the first assistance data, reference may be made to the descriptions above, and details are described here again.

7-4: Location information interaction process, that is, the anchor UE reports a first measurement result to the LMF. The process may include: the LMF sends a location information request (Request Location Information) message to the anchor UE, and the anchor UE sends a location information provide (Provide Location Information) message to the LMF.

Step 8: The LMF performs LPP message interaction with the target UE.

Content of LPP message interaction between the LMF and the target UE may include one or a combination of the following LPP processes (that is, 8-1 to 8-3).

8-1: UE information interaction process, that is, the LMF obtains UE information of target UE. The process may include: the LMF sends an LPP message (such as a UE information request (Request UE Information)) to the target UE, where the message is used to request to obtain information of the target UE, and the target UE sends a response message to the LMF, carrying corresponding UE information, where the UE information here includes a sidelink resource configuration or resource allocation mode of the target UE, and the like.

8-2: Assistance data interaction process, that is, the LMF provides second assistance data to the target UE, where the process may include: the LMF sends an assistance data provide (Provide Assistance Data) message to the target UE, and optionally, before that, the target UE sends an assistance data request (Request Assistance Data) message to the LMF.

For specific content included in the second assistance data, reference may be made to the descriptions above, and details are described here again.

8-3: Location information interaction process, that is, the target UE reports a second measurement result to the LMF. The process may include: the LMF sends a location information request (Request Location Information) message to the target UE, and the target UE sends a location information provide (Provide Location Information) message to the LMF.

It should be noted here that the first assistance data and the second assistance data in the foregoing 7-2 may respectively indicate to configure the target UE to transmit an SL PRS and configure the anchor UE to perform measurement on the SL PRS, or configure the target UE to transmit an SL PRS and configure the anchor UE to perform measurement on the SL PRS. In the former case, the foregoing step 7 includes 7-4, and specific content of 7-4 is "the anchor UE reports an SL PRS measurement result." In the latter case, the foregoing step 8 includes 8-3, and specific content of 8-3 is "the target UE reports an SL PRS measurement result".

Step 9: The LMF obtains a location result of the target UE.

Step 10: The LMF returns the location result to the AMF.

It should be noted that an execution order of the step 7 (the LMF performs an interaction process with the anchor UE) and step 8 (the LMF performs an interaction process with the target UE) is not limited, and steps 5 and 6 may each contain multiple LPP processes, and the LPP process in step 5 may be executed alternately with the LPP process in step 6, whose execution order is not limited here.

The following describes two manners of LPP message interaction between the LMF and the anchor UE participating in sidelink positioning.

Manner 1: The LMF performs interaction with the anchor UE through the target UE.

That is, the LMF performs interaction with the anchor UE through the target UE, that is, the LMF sends a message to the target UE, and the target UE forwards the message to the anchor UE through a sidelink unicast connection of the PC5 interface.

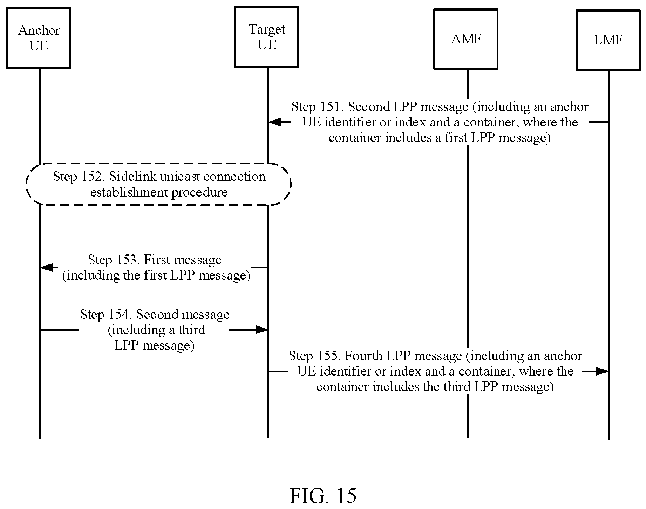

As shown in FIG. 15, the process described in manner 1 includes the following steps 151 to 155:

Step 151: When the LMF needs to send a first LPP message to the anchor UE, the LMF sends a second LPP message to the target UE. The second LPP message includes a UE ID or UE index of the anchor UE and a container (that is, the target UE may not decode content of the container), where the container corresponds to a first LPP message to be sent to the anchor UE.

The UE ID or UE index of the anchor UE mentioned here may be a UE ID or UE index sent by the target UE to the LMF in step 5. That is, each anchor UE corresponds to a UE ID or UE index of the anchor UE.

Optionally, the second LPP message may be a newly introduced LPP message (for ease of description, also referred to as an anchor terminal message (anchor UE message) here, which is merely an example and of which a name is not limited), and the new LPP message is used to deliver an LPP message to be sent to the anchor UE.

Optionally, the second LPP message may include an LPP message that the LMF needs to send to one or more anchor UEs.

Optionally, for each anchor UE, the second LPP message may include one or more LPP messages to be sent to the anchor UE, thereby reducing the positioning delay and signaling overheads.

Step 152: The target UE determines a corresponding anchor UE based on a UE ID or UE index of (each) anchor UE in the first LPP message. If no sidelink unicast connection is established between the target UE and the anchor UE, the target UE establishes a sidelink unicast connection to the anchor UE; or if the unicast connection establishment fails, the target UE sends a failure message to the LMF, where the failure message may carry a cause value for indicating a delivery failure or a unicast connection establishment failure.

Step 153: The target UE sends the first LPP message to the anchor UE.

Optionally, the target UE sends a first message to the anchor UE, where the first message carries a container, and the container corresponds to the first LPP message. The first message may be a PC5 RRC message, a PC5-S message, or a PC5 interface sidelink positioning protocol message.

Step 154: When the anchor UE needs to send a third LPP message to the LMF, optionally, the anchor UE sends a second message to the target UE, where the second message carries a container, and the container corresponds to the third LPP message. The second message may be a PC5 RRC message, a PC5-S message, or a PC5 interface sidelink positioning protocol message.

Step 155: The target UE sends a fourth LPP message to the LMF, where the fourth LPP message includes the UE ID or UE index of the anchor UE and a container, where the container corresponds to a third LPP message to be sent to the LMF.

The UE ID or UE index of the anchor UE mentioned here may be the UE ID or UE index of the anchor UE in step 151. Based on the UE ID or UE index of the anchor UE, the LMF may learn which anchor UE sent the message.

In addition, the fourth LPP message and the second LPP message may be a same message or different messages.

Manner 2: The LMF directly performs interaction with the anchor UE.

That is, the LMF does not perform interaction with the anchor UE through the target UE. That is, the LMF does not perform forwarding through the target UE, but performs interaction with the anchor UE "directly" through the Uu interface. "Directly" here means that a new positioning session is established between the LMF and the anchor UE to perform message interaction without forwarding through the target UE, which is similar to the interaction between the LMF and the target UE.

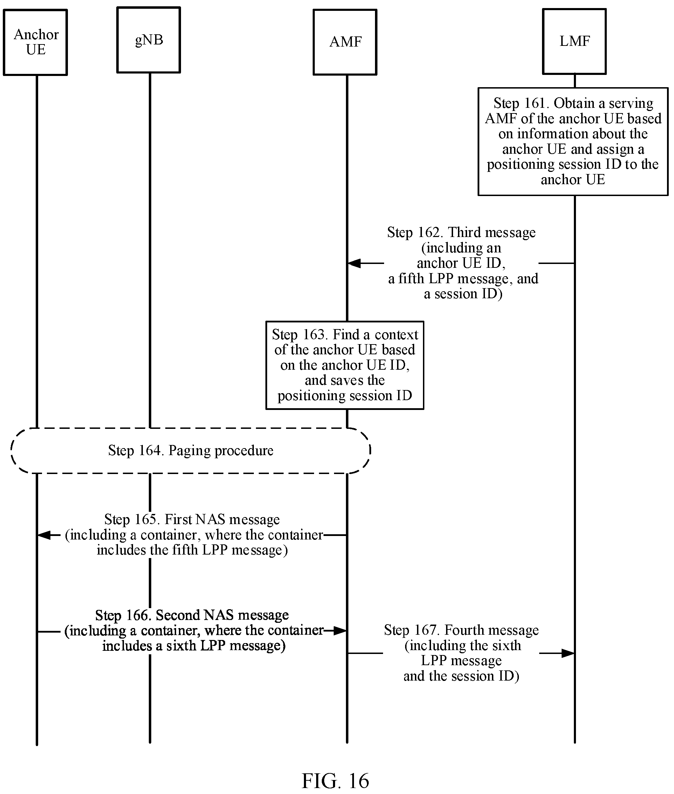

As shown in FIG. 16, the process described in the manner 2 includes the following steps 161 to 167.

Step 161: When the LMF sends an LPP message to the anchor UE for the first time (at that time, a positioning "channel" between the LMF and the anchor UE has not been established), the LMF obtains a serving AMF of the anchor UE based on the information about the anchor UE obtained in step 5 or step 7 in this embodiment, for example, obtaining the serving AMF of the anchor UE (the AMF registered by the UE is the service AMF of the UE) based on a CGI of the serving cell or registered AMF information. The LMF may assign a positioning session ID to the anchor UE.

Optionally, different positioning session IDs may be assigned for different anchor UEs.

Step 162: The LMF delivers a third message to the serving AMF of the anchor UE.

The third message includes:
a positioning session ID allocated in step 161;
a fifth LPP message that needs to be sent to the anchor UE; and
an anchor UE ID (the anchor UE ID may be a UE ID in the anchor UE information obtained in step 5 in this embodiment, such as an S-TMSI, an IMSI, or a SUPI).

Step 163: The serving AMF finds a context of the anchor UE in the serving AMF based on the anchor UE ID, and saves the positioning session ID.

Step 164: Based on the context of the anchor UE, if the anchor UE is in a CM-IDLE state, the serving AMF initiates a paging procedure to make the UE enter a CM-CONNECTED state.

Step 165: The serving AMF sends a first NAS message to the anchor UE, where the first NAS message includes a fifth LPP message to be sent to the anchor UE.

It should be noted that when the LMF sends an LPP message to one anchor UE for the first time, the foregoing steps 161 to 165 are performed. Once a positioning session ID is established and when subsequently the LMF sends an LPP message to the anchor UE, a third message including the positioning session ID and the LPP message is first delivered to the serving AMF, and the serving AMF may send the first NAS message carrying the LPP message to the anchor UE.

Step 166: When the anchor UE needs to send a sixth LPP message to the LMF, the anchor UE sends a second NAS message to the serving AMF, where the second NAS message includes the sixth LPP message to be sent to the LMF.

Step 167: The serving AMF delivers a fourth message to the LMF, where the fourth message includes the positioning session ID saved in step 163 and the sixth LPP message to be sent to the LMF.

Based on the positioning session ID, the LMF learns that the sixth LPP message is an LPP message sent by the anchor UE.

In addition, it should be noted that if sidelink positioning involves multiple anchor UEs, the LMF may communicate with each anchor UE based on the foregoing process.

It should be noted that the foregoing two manners of LPP message interaction between the LMF and the anchor UE participating in sidelink positioning may be implemented in this embodiment or may be implemented independently, that is, the manner 1 may be implemented as an independent embodiment, and the manner 2 may also be implemented as an independent embodiment.

The execution subject of the positioning method provided in the embodiments of this application may be a positioning apparatus. In the embodiments of this application, the positioning apparatus provided in the embodiments of this application is described by using positioning being executed by the positioning apparatus as an example.

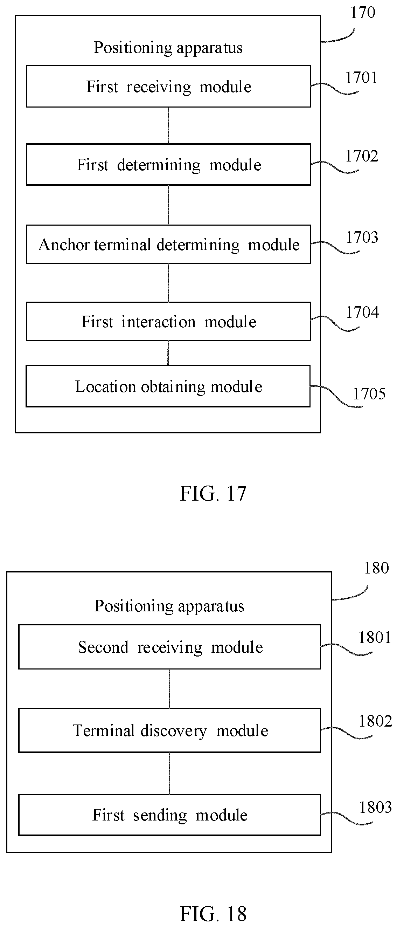

In a fifth aspect, an embodiment of this application provides a positioning apparatus, which can be applied to a location server. As shown in FIG. 17, the positioning apparatus 170 may include the following modules:
a first receiving module 1701, configured to receive a location request, where the location request is used to request to perform positioning for a target terminal;
a first determining module 1702, configured to determine to perform sidelink positioning for the target terminal;
an anchor terminal determining module 1703, configured to determine one or more anchor terminals participating in positioning;
a first interaction module 1704, configured to perform interaction with the target terminal and one or more anchor terminals separately, perform a sidelink positioning procedure, and obtain positioning measurement information; and
a location obtaining module 1705, configured to obtain location information of the target terminal based on the positioning measurement information.

Optionally, the anchor terminal is a terminal with a known location and participating in transmission of sidelink positioning reference signal, or the anchor terminal is a terminal with a known location and participating in measurement of sidelink positioning reference signal.

Optionally, the first determining module 1702 is specifically configured to:
obtain sidelink positioning capability information of the target terminal; and
determine to perform sidelink positioning for the target terminal, in a case that the sidelink positioning capability information of the target terminal indicates that the target terminal supports sidelink positioning.

Optionally, the anchor terminal determining module 1703 is specifically configured to:
send a first request message to the target terminal, where the first request message is used for requesting a candidate anchor terminal;
receive a first response message corresponding to the first request message and sent by the target terminal, where the first response message includes a candidate anchor terminal list; and
determine one or more anchor terminals participating in positioning based on the candidate anchor terminal list. Optionally, the first request message includes at least one of the following:
   the maximum number of anchor terminals participating in a positioning procedure;
   the minimum number of anchor terminals participating in a positioning procedure; and
   a target condition to be met by an anchor terminal participating in a positioning procedure.

Optionally, the target condition includes at least one of the following:
location information is known;
location information is able to be obtained;
having a specific sidelink positioning capability;
being within network coverage;
being within a specific area;
being in a specified radio resource control RRC state;
a PC5 interface resource is greater than a preset threshold;
a sidelink unicast connection has been established to the target terminal; and
being in a specified terminal list.

Optionally, the first response message further includes first terminal information of the candidate anchor terminal, where the first terminal information includes at least one of the following:
a terminal identifier;
a terminal index;
an RRC status;
identification information of a serving cell;
registered access and mobility management function AMF information;
sidelink positioning capability information;
a sidelink resource configuration;
a sidelink resource allocation mode; and
a resource scheduling type in a case that the sidelink resource allocation mode is mode 1.

Optionally, for performing interaction with the anchor terminal and performing sidelink positioning, the first interaction module 1704 is specifically configured to perform at least one of the following:
performing terminal information interaction with the anchor terminal and obtaining second terminal information of the anchor terminal;
performing positioning capability interaction with the anchor terminal and obtaining sidelink positioning capability information of the anchor terminal;
performing assistance data interaction with the anchor terminal and sending first assistance data to the anchor terminal; and
performing location information interaction with the anchor terminal and obtaining a first measurement result of the anchor terminal; where
the positioning measurement information includes the first measurement result.

Optionally, the second terminal information includes at least one of the following:
a sidelink resource configuration;
a sidelink resource allocation mode;
a resource scheduling type in a case that the sidelink resource allocation mode is mode 1;
identification information of a serving cell;
registered access and mobility management function AMF information; and
sidelink positioning capability information.

Optionally, for performing interaction with the target terminal and performing sidelink positioning, the first interaction module 1704 is specifically configured to perform at least one of the following:
performing terminal information interaction with the target terminal and obtaining third terminal information of the target terminal;
performing positioning capability interaction with the target terminal and obtaining sidelink positioning capability information of the target terminal;
performing assistance data interaction with the target terminal and sending second assistance data to the target terminal; and
performing location information interaction with the target terminal and obtaining a second measurement result of the target terminal; where
the positioning measurement information includes the second measurement result.

Optionally, the third terminal information includes at least one of the following:
a sidelink resource configuration; and
a sidelink resource allocation mode.

Optionally, for performing interaction with the anchor terminal, the first interaction module 1704 is specifically configured to:
perform interaction with the anchor terminal via the target terminal.

Optionally, for performing interaction with the anchor terminal via the target terminal, the first interaction module 1704 is specifically configured to perform at least one of the following:
sending a second long term evolution positioning protocol LPP message to the target terminal, where the second LPP message includes identification information or an index of the anchor terminal and a first container, and the first container includes a first LPP message sent to the anchor terminal by the location server; and
receiving a fourth LPP message sent by the target terminal, where the fourth LPP message includes identification information or an index of the anchor terminal and a second container, and the second container includes a third LPP message sent by the anchor terminal to the location server.

Optionally, for performing interaction with the anchor terminal, the first interaction module 1704 is specifically configured to:
determine a target AMF, where the target AMF is an AMF registered by the anchor terminal; and
perform interaction with the anchor terminal through the target AMF.

Optionally, for performing interaction with the anchor terminal through the target AMF, the first interaction module 1704 is specifically configured to perform at least one of the following:
sending a third message to the target AMF, where the third message includes a positioning session identifier assigned to the anchor terminal by the location server, a fifth LPP message sent to the anchor terminal by the location server, and identification information of the anchor terminal; and
receiving a fourth message sent by the target AMF, where the fourth message includes a positioning session identifier of the anchor terminal and a sixth LPP message sent by the anchor terminal to the location server.

Optionally, the first request message is a long term evolution positioning protocol LPP message or a sidelink positioning protocol message, and the first response message is a long term evolution positioning protocol LPP message or a sidelink positioning protocol message.

The positioning apparatus in this embodiment of this application may be an electronic device, such as an electronic device with an operating system, or a component in the electronic device, such as an integrated circuit or a chip. The electronic device may be a network-side device. For example, the network-side device may include but is not limited to the foregoing types of the network-side device 12.

The positioning apparatus provided in this embodiment of this application can implement the processes implemented in the method embodiment in FIG. 8, with the same technical effects achieved. To avoid repetition, details are not described herein again.

In a sixth aspect, an embodiment of this application provides a positioning apparatus, which can be applied to a target terminal. As shown in FIG. 18, the positioning apparatus 180 may include the following modules:
a second receiving module 1801, configured to receive a first request message sent by a location server, where the first request message is used for requesting a candidate anchor terminal;
a terminal discovery module 1802, configured to perform a candidate anchor terminal discovery procedure to obtain a candidate anchor terminal list; and
a first sending module 1803, configured to send a first response message for the first request message to the location server, where the first response message includes the candidate anchor terminal list.

Optionally, the first request message includes at least one of the following:
the maximum number of anchor terminals participating in a positioning procedure;
the minimum number of anchor terminals participating in a positioning procedure; and
a target condition to be met by an anchor terminal participating in a positioning procedure.

Optionally, the target condition includes at least one of the following:
location information is known;
location information is able to be obtained;
having a specific sidelink positioning capability;
being within network coverage;
being within a specific area;
being in a specified radio resource control RRC state;
a PC5 interface resource is greater than a preset threshold;
a sidelink unicast connection has been established to the target terminal; and
being in a specified terminal list.

Optionally, the first response message further includes first terminal information of the candidate anchor terminal, where the first terminal information includes at least one of the following:
a terminal identifier;
a terminal index;
an RRC status;
identification information of a serving cell;
registered access and mobility management function AMF information;
sidelink positioning capability information;
a sidelink resource configuration;
a sidelink resource allocation mode; and
a resource scheduling type in a case that the sidelink resource allocation mode is mode 1.

Optionally, the apparatus further includes a third interaction module, configured to perform at least one of the following:
performing terminal information interaction with the location server and sending third terminal information of the target terminal to the location server;
performing positioning capability interaction with the location server and sending sidelink positioning capability information of the target terminal to the location server;
performing assistance data interaction with the location server and obtaining second assistance data sent by the location server; and
performing location information interaction with the target terminal and sending a second measurement result of the target terminal to the location server.

Optionally, the third terminal information includes at least one of the following:
a sidelink resource configuration; and
a sidelink resource allocation mode.

Optionally, the apparatus further includes:
a fourth interaction module, configured to forward a message exchanged between the location server and one or more anchor terminals participating in positioning.

Optionally, the anchor terminal is a terminal with a known location and participating in transmission of sidelink positioning reference signal, or the anchor terminal is a terminal with a known location and participating in measurement of sidelink positioning reference signal.

Optionally, the fourth interaction module is specifically configured to:
receive a second long term evolution positioning protocol LPP message sent by the location server, where the second LPP message includes identification information or an index of the anchor terminal and a first container, and the first container includes a first LPP message sent to the anchor terminal by the location server; and
determine the anchor terminal based on the identification information or index of the anchor terminal, and send a first message to the anchor terminal, where the first message includes a third container, and the third container includes the first LPP message.

Optionally, the fourth interaction module is further configured to:
receive a second message sent by the anchor terminal, where the second message includes a fourth container, and the fourth container includes a third LPP message sent by the anchor terminal to the location server; and
send a fourth LPP message to the location server, where the fourth LPP message includes identification information or an index of the anchor terminal and a second container, and the second container includes the third LPP message.

Optionally, the first message is one of a PC5 RRC message, a PC5-signaling message, and a PC5 interface sidelink positioning protocol message.

Optionally, the second message is one of a PC5 RRC message, a PC5-signaling message, and a PC5 interface sidelink positioning protocol message.

Optionally, the apparatus further includes:
a connection establishing module, configured to establish a sidelink unicast connection to the anchor terminal in a case that no sidelink unicast connection is established between the target terminal and the anchor terminal; and
the fourth interaction module is specifically configured to:
   forward, through the sidelink unicast connection between the target terminal and the anchor terminal, the message exchanged between the location server and the anchor terminal.

Optionally, the apparatus further includes:
a failure feedback module, configured to: in a case that the sidelink unicast connection between the target terminal and the anchor terminal fails, send a failure message to the location server.

Optionally, the first request message is a long term evolution positioning protocol LPP message or a sidelink positioning protocol message, and the first response message is a long term evolution positioning protocol LPP message or a sidelink positioning protocol message.

The positioning apparatus in this embodiment of this application may be an electronic device, such as an electronic device with an operating system, or a component in the electronic device, such as an integrated circuit or a chip. The electronic device may be a terminal. For example, the terminal may include but is not limited to the foregoing types of the terminal 11.

The positioning apparatus provided in this embodiment of this application can implement the processes implemented in the method embodiment in FIG. 9, with the same technical effects achieved. To avoid repetition, details are not described herein again.

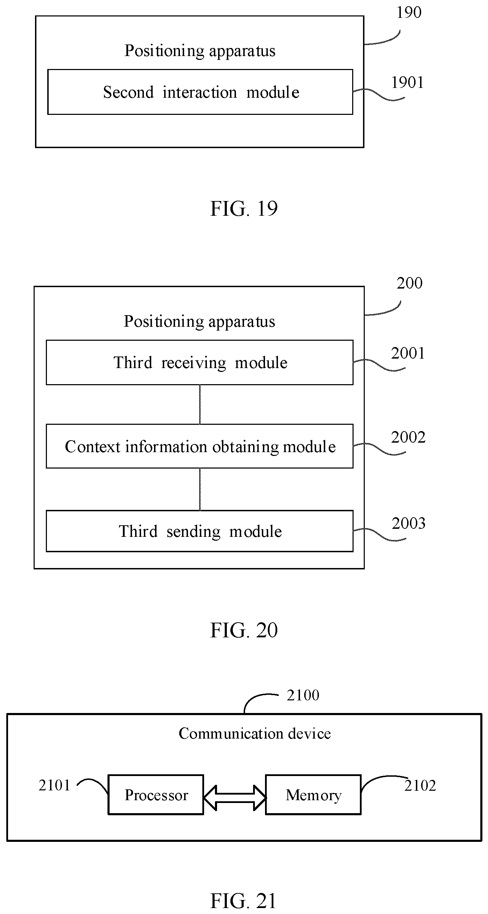

In a seventh aspect, an embodiment of this application provides a positioning apparatus, which can be applied to a target terminal. As shown in FIG. 19, the positioning apparatus 190 may include the following modules:
a second interaction module 1901, configured to perform interaction with a location server and perform a sidelink positioning procedure for positioning on a target terminal.

Optionally, the anchor terminal is a terminal with a known location and participating in transmission of sidelink positioning reference signal, or the anchor terminal is a terminal with a known location and participating in measurement of sidelink positioning reference signal.

Optionally, the second interaction module is configured to perform at least one of the following:
performing terminal information interaction with the location server and sending second terminal information of the anchor terminal to the location server;
performing positioning capability interaction with the location server and sending sidelink positioning capability information of the anchor terminal to the location server;
performing assistance data interaction with the location server and obtaining first assistance data sent by the location server; and
performing location information interaction with the location server and sending a first measurement result of the anchor terminal to the location server.

Optionally, the second terminal information includes at least one of the following:
a sidelink resource configuration;
a sidelink resource allocation mode;
a resource scheduling type in a case that the sidelink resource allocation mode is mode 1;
identification information of a serving cell;
registered access and mobility management function AMF information; and
sidelink positioning capability information.

Optionally, for performing interaction with the location server, the second interaction module 1901 is specifically configured to:
perform interaction with the location server through the target terminal;
   or,
perform interaction with the location server through a target AMF, where the target AMF is an AMF registered by the anchor terminal.

Optionally, for performing interaction with the location server through the target terminal, the second interaction module 1901 is specifically configured to perform at least one of the following:
receiving a first message sent by the target terminal, where the first message includes a third container, and the third container includes a first LPP message sent by the location server to the anchor terminal; and
sending a second message to the target terminal, where the second message includes a fourth container, and the fourth container includes a third LPP message sent by the anchor terminal to the location server.

Optionally, for performing interaction with the location server through the target AMF, the second interaction module 1901 is specifically configured to perform at least one of the following:
receiving a first non-access stratum NAS message sent by the target AMF, where the first non-access stratum NAS message includes a fifth LPP message sent by the location server to the anchor terminal; and
sending a second NAS message to the target terminal, where the second NAS message includes a sixth LPP message sent by the anchor terminal to the location server.

The positioning apparatus in this embodiment of this application may be an electronic device, such as an electronic device with an operating system, or a component in the electronic device, such as an integrated circuit or a chip. The electronic device may be a terminal. For example, the terminal may include but is not limited to the foregoing types of the terminal 11.

The positioning apparatus provided in this embodiment of this application can implement the processes implemented in the method embodiment in FIG. 10, with the same technical effects achieved. To avoid repetition, details are not described herein again.

In an eighth aspect, the embodiment of this application provides a positioning apparatus, which can be applied to an AMF. As shown in FIG. 20, the positioning apparatus 200 may include the following modules:
a third receiving module 2001, configured to receive a third message sent by a location server, where the third message includes identification information of an anchor terminal and a fifth LPP message sent by the location server to the anchor terminal, and the AMF is an AMF registered by the anchor terminal;
a context information obtaining module 2002, configured to obtain context information of the anchor terminal based on the identification information of the anchor terminal; and
a third sending module 2003, configured to send a first non-access stratum NAS message to the anchor terminal based on the context information, where the first NAS message includes the fifth LPP message.

Optionally, the anchor terminal is a terminal with a known location and participating in transmission of sidelink positioning reference signal, or the anchor terminal is a terminal with a known location and participating in measurement of sidelink positioning reference signal.

Optionally, the third sending module 2003 is specifically configured to:
in a case that the AMF determines, based on the context information of the anchor terminal, that the anchor terminal is in a connection management-idle state, page the anchor terminal to make the anchor terminal enter a connection management-connected state; and
after the anchor terminal enters the connection management-connected state, send the first NAS message to the anchor terminal.

Optionally, the third message further includes a positioning session identifier allocated to the anchor terminal by the location server.

Optionally, the apparatus further includes:
a storage module, configured to store a positioning session identifier of the anchor terminal;
a fourth receiving module, configured to receive a second NAS message sent by the anchor terminal, where the second NAS message includes a sixth LPP message sent by the anchor terminal to the location server; and
a fourth sending module, configured to send a fourth message to the location server, where the fourth message includes the positioning session identifier of the anchor terminal and the sixth LPP message.

The positioning apparatus in this embodiment of this application may be an electronic device, such as an electronic device with an operating system, or a component in the electronic device, such as an integrated circuit or a chip. The electronic device may be a network-side device. For example, the network-side device may include but is not limited to the foregoing types of the network-side device 12.

The positioning apparatus provided in this embodiment of this application can implement the processes implemented in the method embodiment in FIG. 11, with the same technical effects achieved. To avoid repetition, details are not described herein again.

Optionally, as shown in FIG. 21, an embodiment of this application further provides a communication device 2100, including a processor 2101 and a memory 2102. A program or instructions capable of running on the processor 2101 are stored in the memory 2102. For example, when the communication device 2100 is a terminal and when the program or the instructions are executed by the processor 2101, the steps of the foregoing embodiments of the method according to the second or third aspect are implemented, with the same technical effects achieved. When the communication device 2100 is a network-side device and when the program or the instructions are executed by the processor 2101, the steps of the foregoing embodiments of the method according to the first or fourth aspect are implemented, with the same technical effects achieved. To avoid repetition, details are not described herein again.

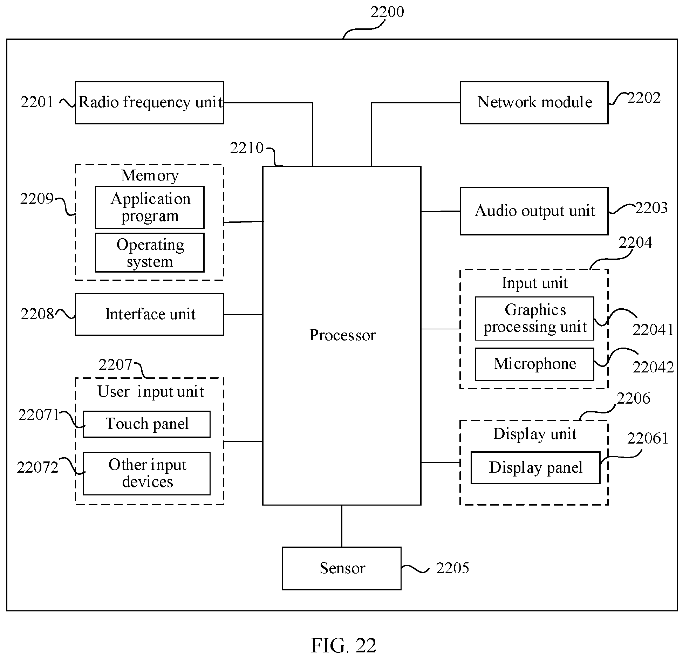

An embodiment of this application further provides a terminal. Specifically, FIG. 22 is a schematic diagram of a hardware structure of a terminal for implementing the embodiments of this application.

The terminal 2200 includes but is not limited to at least part of components such as a radio frequency unit 2201, a network module 2202, an audio output unit 2203, an input unit 2204, a sensor 2205, a display unit 2206, a user input unit 2207, an interface unit 2208, a memory 2209, and a processor 2210.

Persons skilled in the art can understand that the terminal 2200 may further include a power supply (for example, a battery) supplying power to the components, and the power supply may be logically connected to the processor 2210 through a power management system. In this way, functions such as charge management, discharge management, and power consumption management are implemented by using the power management system. The structure of the terminal shown in FIG. 22 does not constitute any limitation on the terminal. The terminal may include more or fewer components than shown in the figure, or a combination of some components, or the components disposed differently. Details are not described herein again.

It can be understood that in this embodiment of this application, the input unit 2204 may include a graphics processing unit (GPU) 22041 and a microphone 22042. The graphics processing unit 22041 processes image data of a still picture or video obtained by an image capture apparatus (such as a camera) in a video capture mode or an image capture mode. The display unit 2206 may include the display panel 22061. The display panel 22061 may be configured in a form of a liquid crystal display, an organic light-emitting diode, or the like. The user input unit 2207 includes at least one of a touch panel 22071 and other input devices 22072. The touch panel 22071 is also referred to as a touchscreen. The touch panel 22071 may include two parts: a touch detection apparatus and a touch controller. The other input devices 22072 may include but are not limited to at least one of a physical keyboard, a functional button (such as a volume control button or a power on/off button), a trackball, a mouse, and a joystick. Details are not described herein.

In this embodiment of this application, after receiving downlink data from a network-side device, the radio frequency unit 2201 sends the downlink data to the processor 2210 for processing; and the radio frequency unit 2201 also sends uplink data to the network-side device. Generally, the radio frequency unit 2201 includes, but is not limited to, an antenna, an amplifier, a transceiver, a coupler, a low noise amplifier, a duplexer, and the like.

The memory 2209 may be configured to store software programs or instructions and various data. The memory 2209 may mainly include a first storage area for storing programs or instructions and a second storage area for storing data, where the first storage area may store an operating system, an application program or instructions required by at least one function (for example, an audio playing function and an image playing function), and the like. In addition, the memory 2209 may be a volatile memory or a non-volatile memory, or the memory 2209 may include a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM), and a direct memory bus random access memory (DRRAM). The memory 2209 described in this embodiment this application includes but is not limited to these and any other suitable types of memories.

The processor 2210 may include one or more processing units. Optionally, the processor 2210 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 2210.

In a case that the terminal 2200 is a target terminal, the radio frequency unit 2201 is configured to receive a first request message sent by a location server, where the first request message is used for requesting a candidate anchor terminal.

The processor 2210 is configured to perform a candidate anchor terminal discovery procedure to obtain a candidate anchor terminal list.

The radio frequency unit 2201 is further configured to send a first response message for the first request message to the location server, where the first response message includes the candidate anchor terminal list.

Optionally, the first request message includes at least one of the following:
the maximum number of anchor terminals participating in a positioning procedure;
the minimum number of anchor terminals participating in a positioning procedure; and
a target condition to be met by an anchor terminal participating in a positioning procedure.

Optionally, the target condition includes at least one of the following:
location information is known;
location information is able to be obtained;
having a specific sidelink positioning capability;
being within network coverage;
being within a specific area;
being in a specified radio resource control RRC state;
a PC5 interface resource is greater than a preset threshold;
a sidelink unicast connection has been established to the target terminal; and
being in a specified terminal list.

Optionally, the first response message further includes first terminal information of the candidate anchor terminal, where the first terminal information includes at least one of the following:
a terminal identifier;
a terminal index;
an RRC status;
identification information of a serving cell;
registered access and mobility management function AMF information;
sidelink positioning capability information;
a sidelink resource configuration;
a sidelink resource allocation mode; and
a resource scheduling type in a case that the sidelink resource allocation mode is mode 1.

Optionally, the radio frequency unit 2201 is further configured to perform at least one of the following:
performing terminal information interaction with the location server and sending third terminal information of the target terminal to the location server;
performing positioning capability interaction with the location server and sending sidelink positioning capability information of the target terminal to the location server;
performing assistance data interaction with the location server and obtaining second assistance data sent by the location server; and
performing location information interaction with the target terminal and sending a second measurement result of the target terminal to the location server.

Optionally, the third terminal information includes at least one of the following:
a sidelink resource configuration; and
a sidelink resource allocation mode.

Optionally, the radio frequency unit 201 is further configured to forward a message exchanged between the location server and one or more anchor terminals participating in positioning.

Optionally, the anchor terminal is a terminal with a known location and participating in transmission of sidelink positioning reference signal, or the anchor terminal is a terminal with a known location and participating in measurement of sidelink positioning reference signal.

Optionally, for forwarding a message exchanged between the location server and the anchor terminal, the radio frequency unit 2201 is specifically configured to:
receive a second long term evolution positioning protocol LPP message sent by the location server, where the second LPP message includes identification information or an index of the anchor terminal and a first container, and the first container includes a first LPP message sent to the anchor terminal by the location server; and
determine the anchor terminal based on the identification information or index of the anchor terminal, and send a first message to the anchor terminal, where the first message includes a third container, and the third container includes the first LPP message.

Optionally, for forwarding a message exchanged between the location server and the anchor terminal, the radio frequency unit 2201 is specifically configured to:
receive a second message sent by the anchor terminal, where the second message includes a fourth container, and the fourth container includes a third LPP message sent by the anchor terminal to the location server; and
send a fourth LPP message to the location server, where the fourth LPP message includes identification information or an index of the anchor terminal and a second container, and the second container includes the third LPP message.

Optionally, the first message is one of a PC5 RRC message, a PC5-signaling message, and a PC5 interface sidelink positioning protocol message.

Optionally, the second message is one of a PC5 RRC message, a PC5-signaling message, and a PC5 interface sidelink positioning protocol message.

Optionally, the processor 2210 is further configured to:
establish a sidelink unicast connection to the anchor terminal in a case that no sidelink unicast connection is established between the target terminal and the anchor terminal.

For forwarding a message exchanged between the location server and the anchor terminal, the radio frequency unit 2201 is specifically configured to:
forward, through the sidelink unicast connection between the target terminal and the anchor terminal, the message exchanged between the location server and the anchor terminal.

Optionally, the radio frequency unit 2201 is further configured to: in a case that the sidelink unicast connection between the target terminal and the anchor terminal fails, send a failure message to the location server.

Optionally, the first request message is a long term evolution positioning protocol LPP message or a sidelink positioning protocol message, and the first response message is a long term evolution positioning protocol LPP message or a sidelink positioning protocol message.

In a case that the terminal 2200 is an anchor terminal, the radio frequency unit 2201 is configured to perform interaction with a location server and perform a sidelink positioning procedure for positioning on a target terminal.

Optionally, the anchor terminal is a terminal with a known location and participating in transmission of sidelink positioning reference signal, or the anchor terminal is a terminal with a known location and participating in measurement of sidelink positioning reference signal.

Optionally, that the radio frequency unit 2201 is configured to perform interaction with a location server and perform a sidelink positioning procedure for positioning on a target terminal includes at least one of the following:
performing terminal information interaction with the location server and sending second terminal information of the anchor terminal to the location server;
performing positioning capability interaction with the location server and sending sidelink positioning capability information of the anchor terminal to the location server;
performing assistance data interaction with the location server and obtaining first assistance data sent by the location server; and
performing location information interaction with the location server and sending a first measurement result of the anchor terminal to the location server.

Optionally, the second terminal information includes at least one of the following:
a sidelink resource configuration;
a sidelink resource allocation mode;
a resource scheduling type in a case that the sidelink resource allocation mode is mode 1;
identification information of a serving cell;
registered access and mobility management function AMF information; and
sidelink positioning capability information.

Optionally, for performing interaction with the location server, the radio frequency unit 2201 is specifically configured to:
perform interaction with the location server through the target terminal;
   or,
perform interaction with the location server through a target AMF, where the target AMF is an AMF registered by the anchor terminal.

Optionally, for performing interaction with the location server through the target terminal, the radio frequency unit 2201 is specifically configured to perform at least one of the following:
receiving a first message sent by the target terminal, where the first message includes a third container, and the third container includes a first LPP message sent by the location server to the anchor terminal; and
sending a second message to the target terminal, where the second message includes a fourth container, and the fourth container includes a third LPP message sent by the anchor terminal to the location server.

Optionally, for performing interaction with the location server through the target AMF, the radio frequency unit 2201 is specifically configured to perform at least one of the following:
receiving a first non-access stratum NAS message sent by the target AMF, where the first non-access stratum NAS message includes a fifth LPP message sent by the location server to the anchor terminal; and
sending a second NAS message to the target terminal, where the second NAS message includes a sixth LPP message sent by the anchor terminal to the location server.

An embodiment of this application further provides a network-side device, including a processor and a communication interface. The network-side device embodiment corresponds to the foregoing location server or AMF side method embodiment, and the implementation processes and implementations of the foregoing method embodiments can be applied to the network-side device embodiments, with the same technical effects achieved.

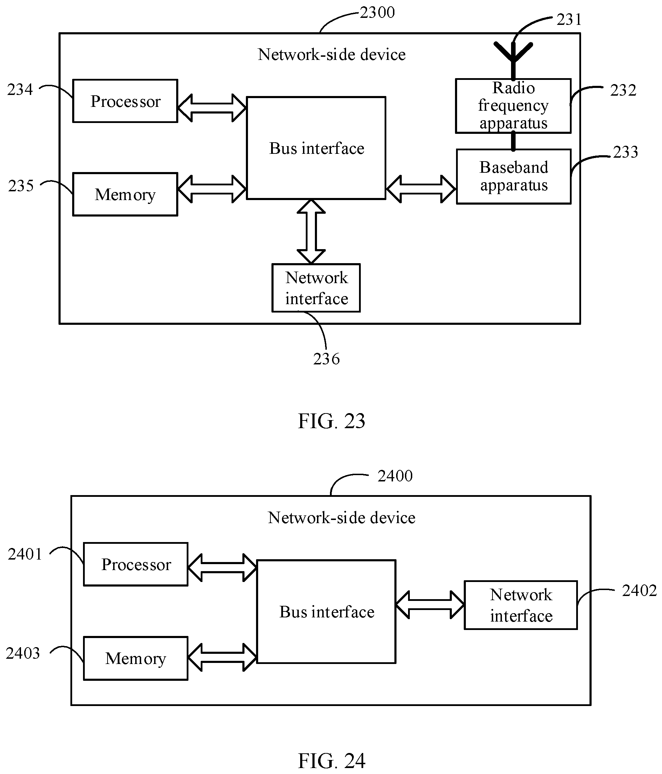

Specifically, an embodiment of this application further provides a network-side device. As shown in FIG. 23, the network-side device 2300 includes an antenna 231, a radio frequency apparatus 232, a baseband apparatus 233, a processor 234, and a memory 235. The antenna 231 is connected to the radio frequency apparatus 232. In an uplink direction, the radio frequency apparatus 232 receives information by using the antenna 231, and sends the received information to the baseband apparatus 233 for processing. In a downlink direction, the baseband apparatus 233 processes to-be-sent information, and sends the information to the radio frequency apparatus 232; and the radio frequency apparatus 232 processes the received information and then sends the information out by using the antenna 231.

The method performed by the network-side device in the foregoing embodiment may be implemented in the baseband apparatus 233, and the baseband apparatus 233 includes a baseband processor.

The baseband apparatus 233 may include, for example, at least one baseband processing unit, where a plurality of chips are disposed on the baseband processing unit. As shown in FIG. 23, one of the chips is, for example, the baseband processor, and connected to the memory 235 through a bus interface, to invoke the program in the memory 235 to perform the operations of the network device shown in the foregoing method embodiment.

The network-side device may further include a network interface 236, where the interface is, for example, a common public radio interface (CPRI).

Specifically, the network-side device 2300 in this embodiment of the present invention further includes a program or instructions stored in the memory 235 and capable of running on the processor 234. When the processor 234 invokes the program or instructions in the memory 235, the method shown in FIG. 8 or FIG. 11 is performed, with the same technical effects achieved. To avoid repetition, details are not described herein again.

Specifically, an embodiment of this application further provides a network-side device. As shown in FIG. 24, the network-side device 2400 includes a processor 2401, a network interface 2402, and a memory 2403. The network interface 2402 is, for example, a common public radio interface (CPRI).

Specifically, the network-side device 2400 in this embodiment of the present invention further includes a program or instructions stored in the memory 2403 and capable of running on the processor 2401. When the processor 2401 invokes the program or instructions in the memory 2403, the method shown in FIG. 8 or FIG. 11 is performed, with the same technical effects achieved. To avoid repetition, details are not described herein again.

An embodiment of this application further provides a readable storage medium. The readable storage medium stores a program or instructions. When the program or instructions are executed by a processor, the processes of the foregoing embodiments of the positioning method according to any one of the first to fourth aspects is implemented, with the same technical effects achieved. To avoid repetition, details are not described again herein.

The processor is a processor in the terminal described in the above embodiments. The readable storage medium includes a computer-readable storage medium, for example, a computer read only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement he processes of the foregoing embodiments of the positioning method according to any one of the first to fourth aspects, with the same technical effects achieved. To avoid repetition, details are not described herein again.

An embodiment of this application further provides a computer program/program product, where the computer program/program product is stored in a storage medium, and when being executed by at least one processor, the computer program/program product is configured to implement he processes of the foregoing embodiments of the positioning method according to any one of the first to fourth aspects, with the same technical effects achieved. To avoid repetition, details are not repeated herein.

An embodiment of this application further provides a positioning system, including a terminal and a network-side device, where the terminal can be configured to perform the steps of the positioning method according to the second or third aspect, and the network-side device can be configured to perform the steps of the positioning method according to the first or fourth aspect.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A positioning method, wherein the method comprises:
receiving, by a location server, a location request, wherein the location request is used to request to perform positioning for a target terminal;
determining, by the location server, to perform sidelink positioning for the target terminal;
determining, by the location server, one or more anchor terminals participating in positioning;
performing, by the location server, interaction with the target terminal and one or more anchor terminals separately, performing a sidelink positioning procedure, and obtaining positioning measurement information; and
obtaining, by the location server, location information of the target terminal based on the positioning measurement information.

2. The method according to claim 1, wherein the anchor terminal is a terminal with a known location and participating in transmission of sidelink positioning reference signal, or the anchor terminal is a terminal with a known location and participating in measurement of sidelink positioning reference signal.

3. The method according to claim 1, wherein the determining, by the location server, to perform sidelink positioning for the target terminal comprises:
obtaining, by the location server, sidelink positioning capability information of the target terminal; and
determining, by the location server, to perform sidelink positioning for the target terminal, in a case that the sidelink positioning capability information of the target terminal indicates that the target terminal supports sidelink positioning.

4. The method according to claim 1, wherein the determining, by the location server, one or more anchor terminals participating in positioning comprises:
sending, by the location server, a first request message to the target terminal, wherein the first request message is used for requesting a candidate anchor terminal;
receiving, by the location server, a first response message corresponding to the first request message and sent by the target terminal, wherein the first response message comprises a candidate anchor terminal list; and
determining, by the location server, one or more anchor terminals participating in positioning based on the candidate anchor terminal list.

5. The method according to claim 4, wherein the first request message comprises at least one of the following:
the maximum number of anchor terminals participating in a positioning procedure;
the minimum number of anchor terminals participating in a positioning procedure; and
a target condition to be met by an anchor terminal participating in a positioning procedure.

6. The method according to claim 5, wherein the target condition comprises at least one of the following:
location information is known;
location information is able to be obtained;
having a specific sidelink positioning capability;
being within network coverage;
being within a specific area;
being in a specified radio resource control RRC state;
a PC5 interface resource is greater than a preset threshold;
a sidelink unicast connection has been established to the target terminal; and
being in a specified terminal list.

7. The method according to claim 4, wherein the first response message further comprises first terminal information of the candidate anchor terminal, and the first terminal information comprises at least one of the following:
a terminal identifier;
a terminal index;
an RRC status;
identification information of a serving cell;
registered access and mobility management function AMF information;
sidelink positioning capability information;
a sidelink resource configuration;
a sidelink resource allocation mode; and
a resource scheduling type in a case that the sidelink resource allocation mode is mode 1.

8. The method according to any one of claims 1 to 7, wherein the performing, by the location server, interaction with the anchor terminal and performing a sidelink positioning procedure comprises at least one of the following:
performing, by the location server, terminal information interaction with the anchor terminal and obtaining second terminal information of the anchor terminal;
performing, by the location server, positioning capability interaction with the anchor terminal and obtaining sidelink positioning capability information of the anchor terminal;
performing, by the location server, assistance data interaction with the anchor terminal and sending first assistance data to the anchor terminal; and
performing, by the location server, location information interaction with the anchor terminal and obtaining a first measurement result of the anchor terminal; wherein
the positioning measurement information comprises the first measurement result.

9. The method according to claim 8, wherein the second terminal information comprises at least one of the following:
a sidelink resource configuration;
a sidelink resource allocation mode;
a resource scheduling type in a case that the sidelink resource allocation mode is mode 1;
identification information of a serving cell;
registered access and mobility management function AMF information; and
sidelink positioning capability information.

10. The method according to any one of claims 1 to 7, wherein the performing, by the location server, interaction with the target terminal and performing a sidelink positioning procedure comprises at least one of the following:
performing, by the location server, terminal information interaction with the target terminal and obtaining third terminal information of the target terminal;
performing, by the location server, positioning capability interaction with the target terminal and obtaining sidelink positioning capability information of the target terminal;
performing, by the location server, assistance data interaction with the target terminal and sending second assistance data to the target terminal; and
performing, by the location server, location information interaction with the target terminal and obtaining a second measurement result of the target terminal; wherein
the positioning measurement information comprises the second measurement result.

11. The method according to claim 10, wherein the third terminal information comprises at least one of the following:
a sidelink resource configuration; and
a sidelink resource allocation mode.

12. The method according to claim 1, wherein the performing, by the location server, interaction with the anchor terminal comprises:
performing, by the location server, interaction with the anchor terminal via the target terminal.

13. The method according to claim 12, wherein the performing, by the location server, interaction with the anchor terminal via the target terminal comprises at least one of the following:
sending, by the location server, a second long term evolution positioning protocol LPP message to the target terminal, wherein the second LPP message comprises identification information or an index of the anchor terminal and a first container, and the first container comprises a first LPP message sent to the anchor terminal by the location server; and
the location server receives a fourth LPP message sent by the target terminal, wherein the fourth LPP message comprises identification information or an index of the anchor terminal and a second container, and the second container comprises a third LPP message sent by the anchor terminal to the location server.

14. The method according to claim 1, wherein the performing, by the location server, interaction with the anchor terminal comprises:
determining, by the location server, a target AMF, wherein the target AMF is an AMF registered by the anchor terminal; and
performing, by the location server, interaction with the anchor terminal through the target AMF.

15. The method according to claim 14, wherein the performing, by the location server, interaction with the anchor terminal through the target AMF comprises at least one of the following:
sending, by the location server, a third message to the target AMF, wherein the third message comprises a positioning session identifier assigned to the anchor terminal by the location server, a fifth LPP message sent to the anchor terminal by the location server, and identification information of the anchor terminal; and
receiving, by the location server, a fourth message sent by the target AMF, wherein the fourth message comprises a positioning session identifier of the anchor terminal and a sixth LPP message sent by the anchor terminal to the location server.

16. The method according to claim 4, wherein the first request message is a long term evolution positioning protocol LPP message or a sidelink positioning protocol message, and the first response message is a long term evolution positioning protocol LPP message or a sidelink positioning protocol message.

17. A positioning method, wherein the method comprises:
receiving, by a target terminal, a first request message sent by a location server, wherein the first request message is used for requesting a candidate anchor terminal;
performing, by the target terminal, a candidate anchor terminal discovery procedure to obtain a candidate anchor terminal list; and
sending, by the target terminal, a first response message for the first request message to the location server, wherein the first response message comprises the candidate anchor terminal list.

18. The method according to claim 17, wherein the first request message comprises at least one of the following:
the maximum number of anchor terminals participating in a positioning procedure;
the minimum number of anchor terminals participating in a positioning procedure; and
a target condition to be met by an anchor terminal participating in a positioning procedure.

19. The method according to claim 18, wherein the target condition comprises at least one of the following:
location information is known;
location information is able to be obtained;
having a specific sidelink positioning capability;
being within network coverage;
being within a specific area;
being in a specified radio resource control RRC state;
a PC5 interface resource is greater than a preset threshold;
a sidelink unicast connection has been established to the target terminal; and
being in a specified terminal list.

20. The method according to claim 17, wherein the first response message further comprises first terminal information of the candidate anchor terminal, and the first terminal information comprises at least one of the following:
a terminal identifier;
a terminal index;
an RRC status;
identification information of a serving cell;
registered access and mobility management function AMF information;
sidelink positioning capability information;
a sidelink resource configuration;
a sidelink resource allocation mode; and
a resource scheduling type in a case that the sidelink resource allocation mode is mode 1.

21. The method according to claim 17, wherein the method further comprises at least one of the following:
performing, by the target terminal, terminal information interaction with the location server and sending third terminal information of the target terminal to the location server;
performing, by the target terminal, positioning capability interaction with the location server and sending sidelink positioning capability information of the target terminal to the location server;
performing, by the target terminal, assistance data interaction with the location server and obtaining second assistance data sent by the location server; and
performing, by the location server, location information interaction with the target terminal and sending a second measurement result of the target terminal to the location server.

22. The method according to claim 21, wherein the third terminal information comprises at least one of the following:
a sidelink resource configuration; and
a sidelink resource allocation mode.

23. The method according to claim 17, wherein the method further comprises:
forwarding, by the target terminal, a message exchanged between the location server and one or more anchor terminals participating in positioning.

24. The method according to claim 23, wherein the anchor terminal is a terminal with a known location and participating in transmission of sidelink positioning reference signal, or the anchor terminal is a terminal with a known location and participating in measurement of sidelink positioning reference signal.

25. The method according to claim 23, wherein the forwarding, by the target terminal, a message exchanged between the location server and the anchor terminal comprises:
receiving, by the target terminal, a second long term evolution positioning protocol LPP message sent by the location server, wherein the second LPP message comprises identification information or an index of the anchor terminal and a first container, and the first container comprises a first LPP message sent to the anchor terminal by the location server; and
determining, by the target terminal, the anchor terminal based on the identification information or index of the anchor terminal, and sending a first message to the anchor terminal, wherein the first message comprises a third container, and the third container comprises the first LPP message.

26. The method according to claim 23 or 25, wherein the forwarding, by the target terminal, a message exchanged between the location server and the anchor terminal comprises:
receiving, by the target terminal, a second message sent by the anchor terminal, wherein the second message comprises a fourth container, and the fourth container comprises a third LPP message sent by the anchor terminal to the location server; and
sending, by the target terminal of positioning, a fourth LPP message to the location server, wherein the fourth LPP message comprises identification information or an index of the anchor terminal and a second container, and the second container comprises the third LPP message.

27. The method according to claim 25, wherein the first message is one of a PC5 RRC message, a PC5-signaling message, and a PC5 interface sidelink positioning protocol message.

28. The method according to claim 26, wherein the second message is one of a PC5 RRC message, a PC5-signaling message, and a PC5 interface sidelink positioning protocol message.

29. The method according to claim 23, wherein the method further comprises:
establishing, by the target terminal, a sidelink unicast connection to the anchor terminal in a case that no sidelink unicast connection is established between the target terminal and the anchor terminal; and
the forwarding, by the target terminal, a message exchanged between the location server and the anchor terminal comprises:
forwarding, by the target terminal through the sidelink unicast connection between the target terminal and the anchor terminal, the message exchanged between the location server and the anchor terminal.

30. The method according to claim 29, wherein the method further comprises:
in a case that the sidelink unicast connection between the target terminal and the anchor terminal fails, sending, by the target terminal, a failure message to the location server.

31. The method according to claim 17, wherein the first request message is a long term evolution positioning protocol LPP message or a sidelink positioning protocol message, and the first response message is a long term evolution positioning protocol LPP message or a sidelink positioning protocol message.

32. A positioning method, wherein the method comprises:
performing, by an anchor terminal, interaction with a location server and performing a sidelink positioning procedure for positioning on a target terminal.

33. The method according to claim 32, wherein the anchor terminal is a terminal with a known location and participating in transmission of sidelink positioning reference signal, or the anchor terminal is a terminal with a known location and participating in measurement of sidelink positioning reference signal.

34. The method according to claim 32, wherein the performing, by an anchor terminal, interaction with a location server and performing a sidelink positioning procedure for positioning on a target terminal comprises at least one of the following:
performing, by the anchor terminal, terminal information interaction with the location server and sending second terminal information of the anchor terminal to the location server;
performing, by the anchor terminal, positioning capability interaction with the location server and sending sidelink positioning capability information of the anchor terminal to the location server;
performing, by the anchor terminal, assistance data interaction with the location server and obtaining first assistance data sent by the location server; and
performing, by the anchor terminal, location information interaction with the location server and sending a first measurement result of the anchor terminal to the location server.

35. The method according to claim 34, wherein the second terminal information comprises at least one of the following:
a sidelink resource configuration;
a sidelink resource allocation mode;
a resource scheduling type in a case that the sidelink resource allocation mode is mode 1;
identification information of a serving cell;
registered access and mobility management function AMF information; and
sidelink positioning capability information.

36. The method according to claim 32, wherein the performing, by an anchor terminal, interaction with a location server comprises:
performing, by the anchor terminal, interaction with the location server through the target terminal;
or,
performing, by the anchor terminal, interaction with the location server through a target AMF, wherein the target AMF is an AMF registered by the anchor terminal.

37. The method according to claim 36, wherein the performing, by the anchor terminal, interaction with the location server through the target terminal comprises at least one of the following:
receiving, by the anchor terminal, a first message sent by the target terminal, wherein the first message comprises a third container, and the third container comprises a first LPP message sent by the location server to the anchor terminal; and
sending, by the anchor terminal, a second message to the target terminal, wherein the second message comprises a fourth container, and the fourth container comprises a third LPP message sent by the anchor terminal to the location server.

38. The method according to claim 36, wherein the performing, by the anchor terminal, interaction with the location server through a target AMF comprises at least one of the following:
receiving, by the anchor terminal, a first non-access stratum NAS message sent by the target AMF, wherein the first non-access stratum NAS message comprises a fifth LPP message sent by the location server to the anchor terminal; and
sending, by the anchor terminal, a second NAS message to the target terminal, wherein the second NAS message comprises a sixth LPP message sent by the anchor terminal to the location server.

39. A positioning method, wherein the method comprises:
receiving, by an access and mobility management function AMF, a third message sent by a location server, wherein the third message comprises identification information of an anchor terminal and a fifth LPP message sent by the location server to the anchor terminal, and the AMF is an AMF registered by the anchor terminal;
obtaining, by the AMF, context information of the anchor terminal based on the identification information of the anchor terminal; and
sending, by the AMF, a first non-access stratum NAS message to the anchor terminal based on the context information, wherein the first NAS message comprises the fifth LPP message.

40. The method according to claim 39, wherein the anchor terminal is a terminal with a known location and participating in transmission of sidelink positioning reference signal, or the anchor terminal is a terminal with a known location and participating in measurement of sidelink positioning reference signal.

41. The method according to claim 39, wherein the sending, by the AMF, a first NAS message to the anchor terminal based on the context information comprises:
in a case that the AMF determines, based on the context information of the anchor terminal, that the anchor terminal is in a connection management-idle state, paging, by the AMF, the anchor terminal to make the anchor terminal enter a connection management-connected state; and
after the anchor terminal enters the connection management-connected state, sending, by the AMF, the first NAS message to the anchor terminal.

42. The method according to claim 39, wherein the third message further comprises a positioning session identifier allocated to the anchor terminal by the location server.

43. The method according to claim 42, wherein the method further comprises:
storing, by the AMF, a positioning session identifier of the anchor terminal;
receiving, by the AMF, a second NAS message sent by the anchor terminal, wherein the second NAS message comprises a sixth LPP message sent by the anchor terminal to the location server; and
sending, by the AMF, a fourth message to the location server, wherein the fourth message comprises the positioning session identifier of the anchor terminal and the sixth LPP message.

44. A positioning apparatus, wherein the apparatus comprises:
a first receiving module, configured to receive a location request, wherein the location request is used to request to perform positioning for a target terminal;
a first determining module, configured to determine to perform sidelink positioning for the target terminal;
an anchor terminal determining module, configured to determine one or more anchor terminals participating in positioning;
a first interaction module, configured to perform interaction with the target terminal and one or more anchor terminals separately, perform a sidelink positioning procedure, and obtain positioning measurement information; and
a location obtaining module, configured to obtain location information of the target terminal based on the positioning measurement information.

45. A positioning apparatus, wherein the apparatus comprises:
a second receiving module, configured to receive a first request message sent by a location server, wherein the first request message is used for requesting a candidate anchor terminal;
a terminal discovery module, configured to perform a candidate anchor terminal discovery procedure to obtain a candidate anchor terminal list; and
a first sending module, configured to send a first response message for the first request message to the location server, wherein the first response message comprises the candidate anchor terminal list.

46. A positioning apparatus, wherein the apparatus comprises:
a second interaction module, configured to perform interaction with a location server and perform a sidelink positioning procedure for positioning on a target terminal.

47. A positioning apparatus, wherein the apparatus comprises:
a third receiving module, configured to receive a third message sent by a location server, wherein the third message comprises identification information of an anchor terminal and a fifth LPP message sent by the location server to the anchor terminal;
a context information obtaining module, configured to obtain context information of the anchor terminal based on the identification information of the anchor terminal; and
a third sending module, configured to send a first non-access stratum NAS message to the anchor terminal based on the context information, wherein the first NAS message comprises the fifth LPP message.

48. A network-side device, comprising a processor and a memory, wherein a program or instructions capable of running on the processor are stored in the memory, and when the program or instructions are executed by the processor, the steps of the positioning method according to any one of claims 1 to 16 are implemented; or the steps of the positioning method according to any one of claims 39 to 43 are implemented.

49. A terminal, comprising a processor and a memory, wherein a program or instructions capable of running on the processor are stored in the memory, and when the program or instructions are executed by the processor, the steps of the positioning method according to any one of claims 17 to 31 are implemented; or the steps of the positioning method according to any one of claims 32 to 38 are implemented.

50. A readable storage medium, wherein a program or instructions are stored in the readable storage medium; and when the program or the instructions are executed by a processor, the steps of the positioning method according to any one of claims 1 to 16 are implemented; or the steps of the positioning method according to any one of claims 17 to 31 are implemented; or the steps of the positioning method according to any one of claims 32 to 38 are implemented; or the steps of the positioning method according to any one of claims 39 to 43 are implemented.

51. A chip, wherein the chip comprises a processor and a communication interface, the communication interface is coupled to the processor, and the processor is configured to run a program or instructions to implement the positioning method according to any one of claims 1 to 16, or to implement the steps of the positioning method according to any one of claims 17 to 31, or to implement the steps of the positioning method according to any one of claims 32 to 38, or to implement the steps of the positioning method according to any one of claims 39 to 43.

52. A computer program product, wherein the program product is stored in a non-volatile storage medium, and the program product is executed by at least one processor to implement the positioning method according to any one of claims 1 to 16, or to implement the steps of the positioning method according to any one of claims 17 to 31, or to implement the steps of the positioning method according to any one of claims 32 to 38, or to implement the steps of the positioning method according to any one of claims 39 to 43.

53. A positioning apparatus, wherein the apparatus is configured to perform the positioning method according to any one of claims 1 to 16, or to perform the steps of the positioning method according to any one of claims 17 to 31, or to perform the steps of the positioning method according to any one of claims 32 to 38, or to perform the steps of the positioning method according to any one of claims 39 to 43.
